(19) **Europäisches Patentamt / European Patent Office / Office européen des brevets**

(11) **EP 4 497 797 A1**

(12) # EUROPEAN PATENT APPLICATION
published in accordance with Art. 153(4) EPC

(43) Date of publication:
**29.01.2025 Bulletin 2025/05**

(21) Application number: **23774920.5**

(22) Date of filing: **22.03.2023**

(51) International Patent Classification (IPC):
**C09J 11/06** (2006.01)  **C09J 163/00** (2006.01)
**C09J 167/00** (2006.01)  **C09J 7/38** (2018.01)

(52) Cooperative Patent Classification (CPC):
**C09J 7/38; C09J 11/06; C09J 163/00; C09J 167/00**

(86) International application number:
**PCT/JP2023/011093**

(87) International publication number:
**WO 2023/182325 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.03.2022   JP 2022046187**

(71) Applicant: **Mitsubishi Chemical Corporation
Tokyo 100-8251 (JP)**

(72) Inventors:
• **SAKAMOTO Kento**
  **Tokyo 100-8251 (JP)**
• **NAKANE Takayuki**
  **Tokyo 100-8251 (JP)**

(74) Representative: **Hoffmann Eitle
Patent- und Rechtsanwälte PartmbB
Arabellastraße 30
81925 München (DE)**

(54) **POLYESTER-BASED PRESSURE-SENSITIVE ADHESIVE COMPOSITION, POLYESTER-BASED PRESSURE-SENSITIVE ADHESIVE, PRESSURE-SENSITIVE ADHESIVE SHEET, DECORATIVE FILM, FILM FOR ELECTRONIC MEMBER, AND DECORATIVE MOLDED OBJECT**

(57)   Provided is, as a polyester adhesive composition capable of forming an adhesive having excellent adhesive force, heat resistance, moist heat resistance, and optical properties, a polyester adhesive composition containing a polyester resin (A) and a polyepoxy compound (B), wherein the polyester resin (A) contains structural units derived from a polyvalent carboxylic acid, structural units derived from a polyhydric alcohol, and wherein the structural units derived from the polyvalent carboxylic acid contain a specific amount of structural units derived from a cyclic structure, and the structural units derived from the polyhydric alcohol contain structural units derived from an aliphatic polyhydric alcohol. The polyester resin (A) also has a specific acid value and a specific glass transition temperature.

EP 4 497 797 A1

**Description**

TECHNICAL FIELD

The present disclosure relates to a polyester adhesive composition, a polyester adhesive, an adhesive sheet, a decorative film, a film for electronic member, and a decorative molded object, and more particularly to a polyester adhesive composition with excellent adhesive force, heat resistance, moist heat resistance, and optical properties, as well as an adhesive produced by crosslinking the adhesive composition, and an adhesive sheet having an adhesive layer containing the adhesive.

The present disclosure also relates to a decorative film formed of the adhesive sheet, and a decorative molded object obtained by laminating the decorative films.

BACKGROUND ART

Polyester resins have hitherto been used in a wide range of applications, such as films, PET bottles, fibers, toners, electrical components, tackifiers, adhesives, and the like, due to their excellent heat resistance, chemical resistance, durability, and mechanical strength. Further, polyester resins are known to exhibit excellent adhesive properties with respect to polar polymers such as polyester, polyvinyl chloride, polyimide, epoxy resins, and the like, as well as to metallic materials such as copper, aluminum, and the like, due to their high polarity originated from their polymer structure.

In addition, attaching or transferring decorative films to molded products such as automobile interior and exterior parts, home appliance parts, and building material parts, has been performed to improve their design and reduce VOC (Volatile Organic Compounds) emissions, as an alternative to conventional painting methods. The molding methods using decorative films include in-mold molding by injection molding, vacuum molding, vacuum pressure molding, and the like. Further, a decorative film with an adhesive layer has been known as the decorative film to be attached to a molded product.

PTL 1 proposes, as a thermoplastic polyester elastomer with excellent moldability, water resistance, and weather resistance, a thermoplastic polyester elastomer, which is a copolymerized polyester containing mainly aromatic dicarboxylic acid as the acid component, 1 to 60 mol% dimer diol as the glycol component relative to the total glycol component, and has a reduced viscosity of 0.5 to 3.0.

Further, PTL 2 proposes, as a polyester adhesive composition with little change over time, such as an increase in adhesive force, even in usage under a high-temperature environment, a polyester adhesive composition containing a polyester resin having carboxy groups derived from at least one of trivalent or more carboxylic acids and their acid anhydrides in at least one of the side chains and the ends of the molecule.

Further, PTL 3 proposes, as a polyester with excellent solvent solubility, excellent heat resistance, excellent low tackiness, low relative permittivity and dielectric loss tangent, and excellent dielectric properties, an adhesive composition containing, relative to 100 mol% of polyvalent carboxylic acid component, 50 mol% or more naphthalene dicarboxylic acid component, and, as a polyhydric alcohol component, at least one of a dimer diol component and tricyclodecanedimethanol.

PTL 4 proposes, as an adhesive composition with excellent long-term durability under a moist heat environment while ensuring high adhesive property, an adhesive composition containing a polyester resin that satisfies an ester bond concentration of 7 mmol/g or less, an acid value of 3 mg KOH/g or more, and a glass transition temperature of -5°C or more.

RELATED ART DOCUMENT

PATENT DOCUMENT

PTL 1: JP-A-H06-128363
PTL 2: JP-A-2019-119872
PTL 3: WO-A-2021/200713
PTL 4: JP-A-2021-134344

SUMMARY

PROBLEMS TO BE SOLVED BY THE DISCLOSURE

In recent years, however, there has been a demand for decorative molding for molded objects with complex surface shapes, such as three-dimensional curved surfaces, which may be heat molded at higher temperatures than those used in previously-known techniques. In such cases, there have been problems in terms of heat resistance such as thermal decomposition of the adhesive used for decorative films, and problems in terms of optical property such as low transparency of the adhesive layer. Usually, increasing the glass transition temperature of the resin is considered to increase the heat resistance; however, on the other hand, increasing the glass transition temperature hardens the resin, thus resulting in problems such as low adhesive force and optical properties. Therefore, it has been difficult to achieve both of these properties at a high level.

For example, PTL 1 discloses a technique related to a polyester elastomer, in which, since polyester resins have high crystallinity, the tackiness is low at room temperature (23°C), making the use in adhesive applications difficult. Further, in PTL 1, the heat resistance was not taken into account because the polyester resin was not given an acid value that serves as a reaction point with the polyepoxy compound.

Further, PTL 2 discloses a technique related to a polyester adhesive for masking, in which, although an excellent heat resistance was obtained, the acid value of the polyester resin that serves as a crosslinking point with the polyepoxy compound is excessively high, resulting in high crosslinking density and extremely low adhesive force. The technique thus has unsolved problems. In addition, the moist heat resistance was not taken into account, and there was a need for improvement in long-term durability under a moist heat environment.

PTL 3 discloses a technique related to a polyester with excellent dielectric properties, in which the polyvalent carboxylic acid contains a large amount of polycyclic polyvalent carboxylic acid with high crystal orientation in order to reduce the dielectric constant, dielectric loss tangent, and water absorption rate; as a result, the glass transition temperature increases, thus posing problems in terms of tackiness and molding stability as an adhesive sheet. In addition, since the polyhydric alcohol contains a large amount of polyhydric alcohol with long-chain alkyl groups with low polarity, there are problems such as inferior solubility in polar solvents, resulting in low long-term stability of resin solutions, and low compatibility with polyepoxy compounds, etc., resulting in poor optical properties.

PTL 4 discloses a technique related to a polyester adhesive, in which, the glass transition temperature of the polyester resin is high to ensure a tack-free property, and the tackiness is low at room temperature (23°C), making the use in adhesive applications difficult.

Under such circumstances, the present disclosure provides a polyester adhesive composition with an excellent adhesive force, heat resistance, moist heat resistance, and optical properties, as well as an adhesive in which such an adhesive composition is crosslinked, an adhesive sheet, a decorative film, a film for electronic member, and a decorative molded object.

MEANS FOR SOLVING THE PROBLEMS

Accordingly, as a result of intensive research in light of such problems, the inventors have found that by crosslinking a polyester resin, which has a specific acid value and glass transition temperature and contains structural units derived from a cyclic structure-containing polyvalent carboxylic acid and structural units derived from an aliphatic polyhydric alcohol, with a polyepoxy compound, it is possible to obtain a polyester adhesive composition with a low glass transition temperature, excellent adhesive force, as well as excellent heat resistance, excellent moist heat resistance, and excellent optical properties, which have been traded off in the previously-known techniques.

Specifically, the present disclosure has a gist as in the following [1] to [21].

[1] A polyester adhesive composition containing a polyester resin (A) and a polyepoxy compound (B), wherein the polyester resin (A) satisfies all of the following (1) to (6):

(1) the polyester resin (A) has structural units derived from a polyvalent carboxylic acid (a) and structural units derived from a polyhydric alcohol (b);
(2) a content of structural units derived from a cyclic structure-containing polyvalent carboxylic acid (a1) relative to 100 mol% of the structural units derived from the polyvalent carboxylic acid (a) is 30 mol% or more;
(3) the structural units derived from the polyhydric alcohol (b) include structural units derived from an aliphatic polyhydric alcohol (b1);
(4) the polyester resin (A) has an acid value of 1.5 to 30 mg KOH/g;
(5) the polyester resin (A) has a glass transition temperature of -75 to -20°C; and
(6) the polyester resin (A) has less than 140 mol% of structural units derived from a cyclic ester relative to 100 mol% of the structural units derived from the polyvalent carboxylic acid (a).

[2] The polyester adhesive composition according to [1], wherein the structural units derived from the cyclic structure-containing polyvalent carboxylic acid (a1) are structural units derived from a monocyclic polyvalent carboxylic acid (a1-1).

[3] The polyester adhesive composition according to [1] or [2], wherein the structural units derived from the aliphatic polyhydric alcohol (b1) include structural units derived from a polyhydric alcohol having a hydrocarbon group in at least one of side chains.

[4] The polyester adhesive composition according to any one of [1] to [3], wherein the polyester resin (A) has structural units derived from a dimer acid (a2) and/or structural units derived from a dimer diol (b2).

[5] The polyester adhesive composition according to any one of [1] to [4], wherein the structural units derived from the aliphatic polyhydric alcohol (b1) has a content of 5 to 80 mol% relative to 100 mol% of the structural units derived from the polyhydric alcohol (b).

[6] The polyester adhesive composition according to any one of [1] to [5], wherein the structural units derived from the polyhydric alcohol (b) include structural units derived from the dimer diols (b2).

[7] The polyester adhesive composition according to any one of [1] to [6], wherein a total content of the structural units derived from the dimer acids (a2) and the structural units derived from the dimer diols (b2) relative to the entire polyester resin (A) is 20 to 90 mass %.

[8] The polyester adhesive composition according to any one of [1] to [7], wherein the polyester resin (A) has an ester bond concentration of 1.5 to 8.0 mmol/g.

[9] The polyester adhesive composition according to any one of [1] to [8], wherein the polyester resin (A) has a crystal fusion heat of 3J/g or less.

[10] The polyester adhesive composition according to any one of [1] to [9], wherein the polyepoxy compound (B) includes a nitrogen atom-containing polyepoxy compound.

[11] The polyester adhesive composition according to any one of [1] to [10], wherein the polyepoxy compound (B) has epoxy groups in an equivalent amount of 0.3 to 5 relative to carboxy groups of the polyester resin (A).

[12] The polyester adhesive composition according to any one of [1] to [11], wherein the polyepoxy compound (B) has a content of 0.1 to 15 parts by mass relative to 100 parts by mass of the polyester resin (A).

[13] A polyester adhesive comprising the adhesive composition according to any one of [1] to [12], which is crosslinked.

[14] The polyester adhesive according to [13], wherein the polyester adhesive has a gel fraction of 20 to 100%.

[15] An adhesive sheet having an adhesive layer comprising the adhesive according to [13] or [14].

[16] The adhesive sheet according to [15], wherein the adhesive sheet has a haze of 3% or less.

[17] An adhesive sheet having a substrate and an adhesive layer comprising the polyester adhesive according to [13] or [14], wherein the adhesive layer is provided on at least one side of the substrate.

[18] A decorative film comprising the adhesive sheet according to [17].

[19] A film for electronic member comprising the adhesive sheet according to [17].

[20] A decorative molded object comprising the decorative film according to [18] laminated on a molded object.

[21] A decorative film comprising an adhesive layer formed of a polyester adhesive composition containing a polyester resin (A) and a polyepoxy compound (B), wherein
the polyester resin (A) satisfies all of following (1) to (4):

(1) the polyester resin (A) has structural units derived from a polyvalent carboxylic acid (a) and structural units derived from a polyhydric alcohol (b);
(2) a content of structural units derived from a cyclic structure-containing polyvalent carboxylic acid (a1) relative to 100 mol% of the structural units derived from the polyvalent carboxylic acid (a) is 30 mol% or more;
(3) the structural units derived from the polyhydric alcohol (b) include structural units derived from an aliphatic polyhydric alcohol (b1); and
(4) the polyester resin (A) has an acid value of 1.5 to 30 mg KOH/g.

EFFECTS OF THE DISCLOSURE

The polyester adhesive composition of the present disclosure enables formation of an adhesive with excellent adhesive force, heat resistance, moist heat resistance, and optical properties, and such an adhesive composition is particularly effective as an adhesive for use in decorative films and films for electronic members.

It has been generally known to increase the glass transition temperature of polyester resins to increase the heat resistance and moist heat resistance of polyester adhesive compositions, or to add functional groups to increase the number of crosslinking points. However, in the present disclosure, a polyester resin having a specific acid value and glass transition temperature and containing, in addition to structural units derived from a cyclic structure-containing polyvalent carboxylic acid, structural units derived from an aliphatic polyhydric alcohol, which may decrease the durability, is crosslinked with a polyepoxy compound. This results in a low glass transition temperature, imparting tackiness at room temperature (23°C), excellent adhesive force, as well as excellent heat resistance, excellent moist heat resistance, and excellent optical properties, which have been traded off in the previously-known techniques.

EMBODIMENTS OF THE DISCLOSURE

Preferred embodiments of the present disclosure will hereinafter be described in detail by way of example.

In the present disclosure, "a compound (acid, alcohol, diol, etc.)" refers to a concept that encompasses derivatives of the compound in addition to the compound itself. For example, the term "carboxylic acid" means to include carboxylic acid as well as carboxylic acid derivatives such as carboxylic acid salts, carboxylic acid anhydrides, carboxylic acid halides, and carboxylic acid esters.

Further, the term "X and/or Y (X and Y have arbitrary structures)" means "at least one of X and Y", and can mean all of "X only", "Y only", or "X and Y".

The polyester adhesive composition (hereinafter may be referred to as "the present adhesive composition") according to one embodiment of the present disclosure contains a polyester resin (A) and a polyepoxy compound (B), and the polyester resin (A) satisfies all of the following (1) to (6).

(1) the polyester resin (A) has structural units derived from a polyvalent carboxylic acid (a) and structural units derived from a polyhydric alcohol (b);
(2) a content of structural units derived from a cyclic structure-containing polyvalent carboxylic acid (a1) relative to 100 mol% of the structural units derived from the polyvalent carboxylic acid (a) is 30 mol% or more;
(3) the structural units derived from the polyhydric alcohol (b) include structural units derived from an aliphatic polyhydric alcohol (b1);
(4) the polyester resin (A) has an acid value of 1.5 to 30 mg KOH/g;
(5) the polyester resin (A) has a glass transition temperature of -75 to -20°C; and
(6) the polyester resin (A) has less than 140 mol% of structural units derived from a cyclic ester relative to 100 mol% of the structural units derived from the polyvalent carboxylic acid (a).

Hereinbelow, each component of the present adhesive composition is described.

<Polyester Resin (A)>

The polyester resin (A) has structural units derived from a polyvalent carboxylic acid (a) and structural units derived from a polyhydric alcohol (b) in the molecule, and is preferably obtained by ester bonding of the polyvalent carboxylic acid (a) and the polyhydric alcohol (b).

[Polyvalent Carboxylic Acids (a)]

Examples of the polyvalent carboxylic acids (a) mentioned above include cyclic structure-containing polyvalent carboxylic acids (a1), such as monocyclic polyvalent carboxylic acids and polycyclic polyvalent carboxylic acids; dimer acids (a2), trivalent or higher polyvalent carboxylic acids with 0 or 1 acid anhydride group; aliphatic polyvalent carboxylic acids; and the like.

In the present disclosure, from the viewpoint of moist heat resistance, the polyester resin (A) contains structural units derived from a cyclic structure-containing polyvalent carboxylic acid (a1). Further, one or more kinds of the polyvalent carboxylic acids (a1) can be used.

The content of the structural units derived from the cyclic structure-containing polyvalent carboxylic acid (a1) relative to 100 mol% of the structural units derived from the polyvalent carboxylic acid (a) is 30 mol% or more, preferably 40 to 99 mol%, more preferably 50 to 95 mol%, particularly preferably 55 to 90 mol%, and especially preferably 60 to 85 mol% or more. The upper limit is usually 100 mol%. If the content of the structural units derived from the cyclic structure-containing polyvalent carboxylic acid (a1) is excessively small, the heat resistance and the moist heat resistance become insufficient. If the content is excessively large, the compatibility with the polyepoxy compound (B) decreases, resulting in insufficient optical properties, or the glass transition temperature increases, resulting in insufficient tackiness, adhesive force, and molding stability.

The content (molar ratio) of the structural units derived from the cyclic structure-containing polyvalent carboxylic acid (a1) relative to 100 mol% of the structural units derived from the polyvalent carboxylic acid (a) is determined from the following formula.

Content (mol%) of structural units derived from cyclic structure-containing polyvalent carboxylic acid (a1) = (Content (mol) of structural units derived from cyclic structure-containing polyvalent carboxylic acid (a1) / Content (mol) of structural units derived from polyvalent carboxylic acid (a)) x 100

**EP 4 497 797 A1**

The content of the structural units derived from the cyclic structure-containing polyvalent carboxylic acid (a1) in the total polyester resin (A) is preferably 3 to 50 mass %, more preferably 5 to 40 mass %, further preferably 7 to 35 mass %, particularly preferably 10 to 30 mass %, and especially preferably 15 to 25 mass %. If the content of the structural units derived from the cyclic structure-containing polyvalent carboxylic acid (a1) is excessively small, the heat resistance and the moist heat resistance tend to become insufficient. If the content of the structural units derived from the cyclic structure-containing polyvalent carboxylic acid (a1) is excessively large, the compatibility with the polyepoxy compound (B) decreases, resulting in insufficient optical properties, or the glass transition temperature increases, resulting in insufficient tackiness, adhesive force, and molding stability.

Examples of the cyclic structure-containing polyvalent carboxylic acids (a1) include monocyclic polyvalent carboxylic acids (a1-1) and polycyclic polyvalent carboxylic acids (a1-2). In particular, the cyclic structure-containing polyvalent carboxylic acid (a1) preferably contains a monocyclic polyvalent carboxylic acid (a1-1) in view of its excellent adhesive force, molding stability, and optical properties. In particular, the cyclic structure-containing polyvalent carboxylic acid (a1) is preferably a monocyclic polyvalent carboxylic acid (a1-1).

Examples of the monocyclic polyvalent carboxylic acids (a1-1) include aromatic monocyclic dicarboxylic acids, such as terephthalic acid, isophthalic acid, or orthophthalic acid, alicyclic monocyclic dicarboxylic acids, such as 1,4-cyclohexanedicarboxylic acid, 1,3-cyclohexanedicarboxylic acid, or 1,2-cyclohexanedicarboxylic acid, and the like.

Furthermore, the monocyclic polyvalent carboxylic acids (a-1) also include trifunctional or higher monocyclic polyvalent carboxylic acids that are introduced to impart a branched backbone and an acid value to the polyester resin (A). Examples of the trifunctional or higher monocyclic polyvalent carboxylic acids include trimellitic acids, trimesic acids, pyromellitic acids, and the like.

Among the aforementioned monocyclic polyvalent carboxylic acids (a1-1), monocyclic aromatic dicarboxylic acids, such as terephthalic acid, isophthalic acid, orthophthalic acid, and the like, are particularly preferable from the viewpoint of excellent heat resistance and moist heat resistance, and terephthalic acid and isophthalic acid are particularly preferable, and isophthalic acid is even more preferable because of lower crystallinity of the polyester resin (A) and excellent stability after dissolution in a solvent, as well as excellent tackiness and adhesive force.

Further, the monocyclic polyvalent carboxylic acid (a1-1) can also be classified into asymmetric monocyclic polyvalent carboxylic acids and symmetric monocyclic polyvalent carboxylic acids. From the viewpoint of reducing the crystallinity of the polyester resin (A), the polyvalent carboxylic acid (a) preferably contains an asymmetric monocyclic polyvalent carboxylic acid, and from the viewpoint of excellent solvent dissolution stability, the polyvalent carboxylic acid (a) preferably contains asymmetric and symmetric monocyclic polyvalent carboxylic acids.

Examples of the asymmetric monocyclic polyvalent carboxylic acids include isophthalic acid, orthophthalic acid, 1,3-cyclohexanedicarboxylic acid, 1,2-cyclohexanedicarboxylic acid, and the like. Among these, isophthalic acid is particularly preferable because of their excellent reactivity and adhesive force.

Examples of the symmetric monocyclic polyvalent carboxylic acids include terephthalic acid, 1,4-cyclohexanedicarboxylic acid, and the like.

When the polyester resin (A) contains structural units derived from the monocyclic polyvalent carboxylic acid (a1-1), the content of the structural units derived from the monocyclic polyvalent carboxylic acid (a1-1) relative to 100 mol% of the structural units derived from the polyvalent carboxylic acid (a) is preferably 30 mol% or more, more preferably 40 to 98 mol%, further preferably 50 to 95 mol%, particularly preferably 55 to 90 mol%, and especially preferably 60 to 85 mol%. If the content of the structural units derived from the monocyclic polyvalent carboxylic acid (a1-1) is excessively small, the heat resistance and the moist heat resistance tend to become insufficient. If the content of the structural units derived from the monocyclic polyvalent carboxylic acid (a1-1) is excessively large, the compatibility with the polyepoxy compound (B) decreases, resulting in insufficient optical properties, or the glass transition temperature increases, resulting in insufficient tackiness, adhesive force, and molding stability.

Further, when asymmetric monocyclic polyvalent carboxylic acids and symmetric monocyclic polyvalent carboxylic acids are used as the monocyclic polyvalent carboxylic acids (a1-1), their content ratio (molar ratio) in the polyester resin (A) is as follows. The ratio of the structural units derived from asymmetric monocyclic polyvalent carboxylic acids to the structural units derived from symmetric monocyclic polyvalent carboxylic acids is preferably 30/70 to 100/0, more preferably 40/60 to 95/5, particularly preferably 45/55 to 90/10, further preferably 50/50 to 85/15, and especially preferably 55/45 to 80/20.

Further, the cyclic structure-containing polyvalent carboxylic acid (a1) may also contain polycyclic polyvalent carboxylic acids (a1-2) in terms of heat resistance and moist heat resistance. Examples of the polycyclic polyvalent carboxylic acids (a1-2) include polycyclic aromatic dicarboxylic acids, such as biphenyl dicarboxylic acids, naphthalene dicarboxylic acids, or naphthalene dicarboxylic acid dimethyl, and the like.

When the polyester resin (A) contains the structural units derived from the polycyclic polyvalent carboxylic acid (a1-2), the content of the structural units derived from the polycyclic polyvalent carboxylic acid (a1-2) relative to 100 mol% of the structural units derived from the polyvalent carboxylic acid (a1) is preferably 50 mol% or less, more preferably 40 mol% or less, further preferably 30 mol% or less, particularly preferably 20 mol% or less, especially preferably 10 mol% or less, and most preferably 5 mol% or less. If the content of the structural units derived from the polycyclic polyvalent carboxylic acid (a1-2) is excessively large, the transparency of the resin decreases and the optical properties becomes insufficient, or the glass transition temperature increases, and tackiness, adhesive force, and molding stability tend to become insufficient.

Further, the structural units derived from the polyvalent carboxylic acid (a) preferably contains structural units derived from a dimer acid (a2) in terms of moist heat resistance and adhesive force. Examples of the dimer acid (a2) include dimer acids (mainly those with 36-44 carbon atoms) derived by dimerization of unsaturated aliphatic acids such as oleic acid, linoleic acid, linolenic acid, or erucic acid, hydrogenated products thereof, and the like. Among these, the hydrogenated products are preferable from the viewpoint of suppressing gelation during the production of the polyester resin.

When the polyester resin (A) contains the structural units derived from the dimer acid (a2), the content of the structural units derived from the dimer acid (a2) relative to 100 mol% of the structural units derived from the polyvalent carboxylic acid (a) is preferably 70 mol% or less, more preferably 3 to 60 mol%, further preferably 5 to 50 mol%, particularly preferably 10 to 45 mol%, and especially preferably 15 to 40 mol%. If the content of the structural units derived from the dimer acid (a2) is excessively small, the adhesive force and the moist heat resistance tend to become insufficient, and if the content of the structural units derived from the dimer acid (a2) is excessively large, the compatibility with the polyepoxy compound (B) tends to decrease, resulting in insufficient optical properties and insufficient solvent dissolution stability.

Further, when the polyester resin (A) contains the structural units derived from the dimer acid (a2), the content of the structural units derived from the dimer acid (a2) in the total polyester resin (A) is preferably 3 to 80 mass %, more preferably 5 to 70 mass %, further preferably 10 to 60 mass %, particularly preferably 15 to 50 mass %, especially preferably 20 to 40 mass %, and most preferably 30 to 45 mass %. If the content of the structural units derived from the dimer acid (a2) is excessively small, the adhesive force and the moist heat resistance tend to become insufficient, and if the content of the structural units derived from the dimer acid (a2) is excessively large, the compatibility with the polyepoxy compound (B) tends to decrease, resulting in insufficient optical properties and insufficient solvent dissolution stability.

Further, the structural units derived from the polyvalent carboxylic acid (a) may also contain structural units derived from an aliphatic polyvalent carboxylic acid in terms of adhesive force and molding stability.

Examples of the aliphatic polyvalent carboxylic acids include malonic acids, dimethyl malonic acids, succinic acids, glutaric acids, adipic acids, trimethyl adipic acids, pimelic acids, 2,2-dimethyl glutaric acids, azelaic acids, sebacic acids, fumaric acids, maleic acids, itaconic acids, thiodipropionic acids, diglycolic acids, 1,9-nonanedicarboxylic acids, and the like. These may be used alone, or two or more of them may be used in combination. Among these, adipic acids, sebacic acids, and azelaic acids are particularly preferable because they lower the glass transition temperature, ensure excellent adhesive force and molding stability, as well as ensuring excellent optical properties of the resin.

When the polyester resin (A) contains the structural units derived from the aliphatic polyvalent carboxylic acid, the content of the structural units derived from the aliphatic polyvalent carboxylic acid relative to 100 mol% of the structural units derived from the polyvalent carboxylic acid (a) is preferably 70 mol% or less, more preferably 3 to 60 mol%, further preferably 5 to 50 mol%, particularly preferably 10 to 45 mol%, and especially preferably 15 to 40 mol%. If the content of the structural units derived from the aliphatic polyvalent carboxylic acid is excessively small, adhesive force and molding stability tend to become insufficient, and if the content of the structural units derived from the aliphatic polyvalent carboxylic acid is excessively large, heat resistance and moist heat resistance tend to become insufficient.

Further, when an acid value is imparted to the polyester resin (A), the structural units derived from the polyvalent carboxylic acid (a) preferably contain structural units derived from a trivalent or higher polyvalent carboxylic acid with 0 or 1 acid anhydride group from the viewpoint of adhesive force.

The valence of the carboxy group in the trivalent or higher polyvalent carboxylic acid with 0 or 1 acid anhydride group is preferably 3 to 6, more preferably 3 to 4.

Examples of the trivalent or higher polyvalent carboxylic acid with 0 or 1 acid anhydride group include trivalent or higher aromatic polyvalent carboxylic acids with 0 or 1 acid anhydride group, such as trimellitic acid, trimesic acid, ethylene glycol bis(anhydrotrimellitate), glycerol tris(anhydrotrimellitate), trimellitic acid anhydride, pyromellitic acid dianhydride, oxydiphthalic acid dianhydride, 3,3',4,4'-benzophenone tetracarboxylic acid dianhydride, 3,3',4,4'-diphenyltetracarboxylic acid dianhydride, 3,3',4,4'-diphenylsulfonetetracarboxylic acid dianhydride, 4,4'-(hexafluoroisopropylidene) diphthalic acid dianhydride, or 2,2'-bis[(dicarboxyphenoxy)phenyl]propane dianhydride, trivalent or higher aliphatic polyvalent carboxylic acids with 0 or 1 acid anhydride group, such as hydrogenated trimellitic acid anhydride, and the like. These may be used alone, or two or more of them may be used in combination.

Among these, the trivalent or higher aromatic polyvalent carboxylic acids with 0 or 1 acid anhydride group are preferable, and trivalent or higher aromatic polyvalent carboxylic acids with 1 acid anhydride group are more preferable, and trimellitic acid anhydride is particularly preferable.

The polyester resin (A) may contain structural units derived from aromatic dicarboxylic acids having sulfonic acid groups, such as sulfoterephthalic acid, 5-sulfoisophthalic acid, 4-sulfophthalic acid, 4-sulfonaphthalene-2,7-dicarboxylic acid, or 5(4-sulfophenoxy)isophthalic acid, and structural units derived from aromatic dicarboxylic acid salt having sulfonic acid salt groups, such as their metal salts or ammonium salts; however, from the viewpoint of moist heat resistance of the polyester resin (A), the content thereof is preferably 10 mol% or less, more preferably 5 mol% or less, particularly preferably 3 mol% or less, further preferably 1 mol% or less, and most preferably 0 mol%, relative to 100 mol% of the structural units derived from the polyvalent carboxylic acid (a).

[Polyhydric Alcohols (b)]

Examples of the polyhydric alcohols (b) include aliphatic polyhydric alcohols (b1), dimer diols (b2), alicyclic polyhydric alcohols, aromatic polyhydric alcohols, bisphenol backbone-containing polyhydric alcohols, and the like. One or more kinds of polyhydric alcohol (b) can be used.

The polyester resin (A) contains, as structural units derived from the polyhydric alcohol (b), structural units derived from the aliphatic polyhydric alcohol (b1).

Examples of the aliphatic polyhydric alcohol (b1) include ethylene glycol, 1,2-propylene glycol, 1,3-propanediol, 1,4-butanediol, 2-methyl-1,3-propanediol, 1,5-pentanediol, neopentyl glycol, 1,6-hexanediol, 3-methyl-1,5-pentanediol, 1,9-nonanediol, 1,10-decanediol, 2-ethyl-2-butylpropanediol, 2,4-diethyl-1,5-pentanediol, 2,2,4-trimethyl-1,3-pentanediol, glycerin, trimethylolethane, trimethylolpropane, pentaerythritol, and the like. Among these, from the viewpoint of excellent hydrolysis resistance, solvent dissolution stability, and optical properties, aliphatic polyhydric alcohols having a hydrocarbon group in at least one of the side chains, such as 1,2-propylene glycol, 2-methyl-1,3-propanediol, neopentyl glycol, 3-methyl-1,5-pentanediol, 2,4-diethyl-1,5-pentanediol, or 2,2,4-trimethyl-1,3-pentanediol, are preferable, and 2-methyl-1,3-propanediol and 3-methyl-1,5-pentanediol are particularly preferable, and 3-methyl-1,5-pentanediol is further preferable in terms of excellent moist heat resistance and adhesive force.

The aliphatic polyhydric alcohols having a hydrocarbon group in at least one of the side chains exclude dimer diols (b2) described later.

The content of the structural units derived from the aliphatic polyhydric alcohol (b1) relative to 100 mol% of the structural units derived from the polyhydric alcohol (b) is preferably 5 to 95 mol%, more preferably 15 to 90 mol%, particularly preferably 25 to 85 mol%, further preferably 35 to 80 mol%, especially preferably 45 to 75 mol%. If the content of the structural units derived from the aliphatic polyhydric alcohol (b1) is excessively small, the compatibility with the polyepoxy compound (B) decreases, resulting in insufficient optical properties and insufficient solvent dissolution stability, and if the content of the structural units derived from the aliphatic polyhydric alcohol (b1) is excessively large, the heat resistance, moist heat resistance, and adhesive force tend to become insufficient.

The polyester resin (A) preferably contains, as the structural units derived from the polyhydric alcohol (b), structural units derived from the dimer diol (b2).

Examples of the dimer diol (b2) include dimer diols as reduced forms of dimer acids (mainly those with 36-44 carbon atoms) derived by dimerization of unsaturated aliphatic acids such as oleic acid, linoleic acid, linolenic acid, or erucic acid, hydrogenated products thereof, and the like. Among these, the hydrogenated products are preferable from the viewpoint of suppressing gelation during the production of the polyester resin (A).

When the polyester resin (A) contains structural units derived from the dimer diols (b2), the content of the structural units derived from the dimer diols (b2) relative to 100 mol% of the structural units derived from the polyhydric alcohols (b) is preferably 3 to 95 mol%, more preferably 5 to 90 mol%, particularly preferably 4 to 80 mol%, further preferably 5 to 70%, especially preferably 10 to 50 mol%, and most preferably 25 to 40 mol%. If the content of the structural units derived from the dimer diols (b2) is excessively small, the adhesive force and the moist heat resistance tend to become insufficient, and if the content of the structural units derived from the dimer diols (b2) is excessively large, the compatibility with the polyepoxy compound (B) tends to decrease, resulting in insufficient optical properties and insufficient solvent dissolution stability.

Further, when the polyester resin (A) contains structural units derived from the dimer diol (b2), the content of the structural units derived from the dimer diol (b2) in the total polyester resin (A) is preferably 3 to 80 mass %, more preferably 5 to 70 mass %, further preferably 10 to 60 mass %, particularly preferably 15 to 50 mass %, especially preferably 18 to 40 mass %, and most preferably 30 to 45 mass %. If the content of the structural units derived from the dimer diols (b2) is excessively small, the heat resistance, moist heat resistance, and adhesive force tend to become insufficient, and if the content of the structural units derived from the dimer diols (b2) is excessively large, the compatibility with the polyepoxy compound (B) tends to decrease, resulting in insufficient optical properties and insufficient solvent dissolution stability.

Examples of the alicyclic polyhydric alcohols include 1,4-cyclohexanediol, 1,4-cyclohexanedimethanol, tricyclodecanediol, tricyclodecanedimethanol, spiroglycol, and the like.

Examples of the aromatic polyhydric alcohol include para-xylene glycol, meta-xylene glycol, ortho-xylene glycol, 1,4-phenylene glycol, ethylene oxide adducts of 1,4-phenylene glycol, and the like.

Examples of the bisphenol backbone-containing polyhydric alcohol include bisphenol A, bisphenol B, bisphenol E, bisphenol F, bisphenol AP, bisphenol BP, bisphenol P, bisphenol PH, bisphenol S, bisphenol Z, 4,4'-dihydroxybenzophenone, bisphenol fluorene, and their hydrogenated products, glycols, such as ethylene oxide adducts or propylene oxide adducts obtained by adding one to several moles of ethylene oxide or propylene oxide to the hydroxyl group of bisphenols, and the like.

Furthermore, the polyester resin (A) may contain, as the polyhydric alcohol (b), for example, polyester diol, polyether diol, polycaprolactonediol, polycarbonate diol, polybutadiene diol, polyisoprenediol, and the like, to easily obtain polymers with the desired molecular weight. These may be used alone, or two or more of them may be used in combination.

[Dimer Acids (a2), Dimer Diols (b2)]

The polyester resin (A) preferably contains structural units derived from the dimer acids (a2) and/or structural units derived from the dimer diols (b2) from the viewpoint of moist heat resistance and adhesive force.

When the polyester resin (A) contains the structural units derived from the dimer acids (a2) and/or the structural units derived from the dimer diols (b2), the total content of the structural units derived from the dimer acids (a2) and the structural units derived from the dimer diols (b2) in the total polyester resin (A) is preferably 20 to 90 mass %, more preferably 30 to 85 mass %, particularly preferably 35 to 80 mass %, further preferably 40 to 75 mass %, especially preferably 45 to 70 mass %, and most preferably 50 to 65 mass %. If the total content of the structural units derived from the dimer acids (a2) and the structural units derived from the dimer diols (b2) is excessively small, the adhesive force and the moist heat resistance tend to become insufficient, and if the total content of the structural units derived from the dimer acids (a2) and the structural units derived from the dimer diols (b2) is excessively large, the compatibility with the polyepoxy compound (B) tends to decrease, resulting in insufficient optical properties and insufficient solvent dissolution stability.

[Trifunctional or Higher Polyvalent Carboxylic Acids and Trifunctional or Higher Polyhydric Alcohols]

It is preferable that the polyester resin (A) contain, as a branched backbone, structural units derived from a trifunctional or higher polyvalent carboxylic acid and/or structural units derived from a trifunctional or higher polyhydric alcohol. In particular, when a crosslinked structure is formed by a reaction with a crosslinker, if the polyester resin (A) has a branched backbone, the number of crosslinking points in the polyester resin (A) increases, thereby efficiently obtaining an adhesive with high cohesive force with a small amount of crosslinker. The trifunctional or higher polyvalent carboxylic acids used to introduce a branched backbone into the polyester resin (A) are different from the polyvalent carboxylic acids used for the depolymerization reaction described later.

Examples of the trifunctional or higher polyvalent carboxylic acids include compounds such as trimellitic acid, trimesic acid, ethylene glycol bis(anhydrotrimellitate), glycerol tris(anhydrotrimellitate), trimellitic acid anhydride, pyromellitic acid dianhydride, oxydiphthalic acid dianhydride, 3,3',4,4'-benzophenone tetracarboxylic acid dianhydride, 3,3',4,4'-diphenyltetracarboxylic acid dianhydride, 3,3',4,4'-diphenylsulfonetetracarboxylic acid dianhydride, 4,4'-(hexafluoroisopropylidene) diphthalic acid dianhydride, or 2,2'-bis[(dicarboxyphenoxy)phenyl]propane dianhydride, and the like.

Further, examples of the trifunctional or higher polyhydric alcohol include glycerin, trimethylolethane, trimethylolpropane, pentaerythritol, and the like.

One or more kinds of these trifunctional or higher polyvalent carboxylic acids and trifunctional or higher polyhydric alcohols can be used.

When the polyester resin (A) contains the structural units derived from the trifunctional or higher polyvalent carboxylic acids and/or the structural units derived from the trifunctional or higher polyhydric alcohols as the branched backbone, the content of the trifunctional or higher polyvalent carboxylic acids relative to 100 mol% of the structural units derived from the polyvalent carboxylic acid (a) is preferably 0.1 to 5 mol%, more preferably 0.3 to 4 mol%, further preferably 0.5 to 3 mol%, and particularly preferably 1 to 2.5 mol%. Further, the content of the trifunctional or higher polyhydric alcohol relative to 100 mol% of the structural units derived from the polyhydric alcohol (b) is preferably 0.1 to 5 mol%, more preferably 0.3 to 4 mol%, further preferably 0.5 to 3 mol%, and particularly preferably 1 to 2.5 mol%. If the content of both or either of them is excessively large, the mechanical properties such as elongation at break points of the coating film formed by applying the adhesive decreases, which tends to reduce the adhesive force, and also tends to cause gelation during the polymerization.

[Structural Units derived from Cyclic Esters]

The polyester resin (A) has the structural units derived from the polyvalent carboxylic acid (a) and the structural units derived from the polyhydric alcohol (b), and may further contain structural units derived from cyclic esters.

Examples of the cyclic ester include aliphatic lactones, such as lactide, β-propiolactone, β-butyrolactone, γ-butyrolactone, γ-hexanolactone, γ octanolactone, δ-valerolactone, δ-hexanolactone, δ-octanolactone, ε-caprolactone, δ-dodecanolactone, α -methyl-γ-butyrolactone, β-methyl-δ-valerolactone, glycolide, or lactide, and the like. One or more kinds of these cyclic ester monomers can be used.

The structural units derived from the cyclic ester in the polyester resin (A) is preferably less than 140 mol%, more preferably less than 100 mol%, particularly preferably less than 60 mol%, further preferably less than 30 mol%, especially preferably less than 15 mol%, and most preferably 0 mol% relative to 100 mol% of the structural units derived from the polyvalent carboxylic acid (a). If the content of the structural units derived from the cyclic ester is excessively large, the heat resistance, moist heat resistance, and solvent dissolution stability tend to become insufficient.

[Production of Polyester Resin (A)]

The polyester resin (A) can be produced by well-known methods.

For example, the polyester resin (A) can be produced by subjecting the polyvalent carboxylic acid (a) and the polyhydric alcohol (b) to an esterification reaction in the presence of a catalyst as needed to obtain a prepolymer, followed by polycondensation to obtain a polyester resin, and further introducing an acid value as needed.

The temperature in the esterification reaction of the polyvalent carboxylic acid (a) and the polyhydric alcohol (b) is usually 180 to 280°C, and the reaction time is usually 60 minutes to 8 hours.

Further, the temperature in the polycondensation is usually 220 to 280°C, and the reaction time is usually 20 minutes to 4 hours. Further, the polycondensation is preferably performed under reduced pressure.

Examples of the method for introducing an acid value in the polyester resin include a method of introducing carboxy groups in the polyester resin by acid addition, depolymerization, or the like, after the esterification reaction or polycondensation under reduced pressure.

In particular, when carboxy groups are introduced at the end of the main chain of the polyester resin, depolymerization is particularly preferable because it is capable of efficiently introducing carboxy groups, increasing the molecular weight between the crosslinking points with the polyepoxy compound (B), and ensuring excellent adhesive force, heat resistance, and molding stability.

Further, acid addition is preferable when carboxy groups are introduced into the side chains of the polyester resin.

When carboxy groups are introduced at the end of the main chain of the polyester resin by the depolymerization, for example, the polyvalent carboxylic acid (a) and the polyhydric alcohol (b) are subjected to an esterification reaction in the presence of a catalyst as needed to obtain a prepolymer, followed by polycondensation and further depolymerization.

The depolymerization is preferably performed using trivalent or higher polyvalent carboxylic acid with 0 or 1 acid anhydride group in terms of adhesive force. Examples of the trivalent or higher polyvalent carboxylic acid with 0 or 1 acid anhydride group include compounds such as trimellitic acid, trimellitic acid anhydride, hydrogenated trimellitic acid anhydride, or trimesic acid. Preferable examples include trivalent or higher polyvalent carboxylic acids with one acid anhydride group, such as trimellitic acid anhydride, hydrogenated trimellitic acid anhydride, or the like, from the viewpoint of suppressing the decrease in molecular weight, and trimellitic acid anhydride is particularly preferable.

The temperature in the depolymerization is usually 200 to 260°C, and the reaction time is usually 10 minutes to 3 hours.

When the polyester resin (A) is produced by depolymerization, the molecular weight of the resin tends to decrease significantly if the content of the structural units derived from the trivalent or higher polyvalent carboxylic acid with 0 or 1 acid anhydride group exceeds 20 mol% relative to 100 mol% of the structural units derived from the polyvalent carboxylic acids (a).

Therefore, the content of the structural units derived from the trivalent or higher polyvalent carboxylic acids with 0 or 1 acid anhydride group relative to 100 mol% of the structural units derived from the polyvalent carboxylic acids (a) is preferably 20% or less, more preferably 1 to 15 mol%, particularly preferably 2 to 10 mol%, and further preferably 3 to 8 mol%.

When carboxy groups are introduced into the side chains of the polyester resin by the acid addition, for example, the polyhydric alcohol (b) and the polyvalent carboxylic acid (a) excluding polyvalent carboxylic acid anhydrides are subjected to an esterification reaction to obtain a prepolymer, and the resulting hydroxyl group-containing prepolymer is reacted with a polyvalent carboxylic acid anhydride for acid addition. In the acid addition, it is preferable to use a compound having at least one carboxylic acid anhydride, since the use of monocarboxylic acid, dicarboxylic acid, or multifunctional carboxylic acid compounds may cause a decrease in molecular weight due to ester exchange.

Further, examples of the methods of acid addition and depolymerization include direct addition in a bulk state and addition using a solution of a polyester resin.

Although the reaction in a bulk state is fast, the large amount addition may result in gelation, and also the reaction requires a high temperature; therefore, for example, care must be taken to shut off oxygen gas to prevent oxidation or the like.

In contrast, the reaction is slower in the addition using a solution, however, a large amount of carboxy groups can be stably introduced.

Examples of the carboxylic acid anhydrides include compounds such as succinic acid anhydride, maleic acid anhydride, orthophthalic acid anhydride, 2,5-norbornenedicarboxylic acid anhydride, tetrahydro phthalic acid anhydride, trimellitic acid anhydride, pyromellitic acid dianhydride, oxydiphthalic acid dianhydride, 3,3',4,4'-benzophenone tetracarboxylic acid dianhydride, 3,3',4,4'-diphenyltetracarboxylic acid dianhydride, 3,3',4,4'-diphenylsulfonetetracarboxylic acid dianhydride, 4,4'-(hexafluoroisopropylidene) diphthalic acid dianhydride, or 2,2'-bis[(dicarboxyphenoxy)phenyl] propane dianhydride, and the like.

When the polyester resin (A) is produced by acid addition, 15 mol% or more of acid addition relative to 100 mol% of the structural units derived from the polyvalent carboxylic acid (a) may cause gelation. Therefore, acid addition is preferably performed in an amount of less than 15 mol%.

[Composition Ratio of Polyester Resin (A)].

In the present disclosure, the ratio (composition ratio) of structural units derived from each component of the polyester resin (A) can be determined by known methods using NMR, such as $^1$H-NMR measurement (proton-type nuclear magnetic resonance measurement) at a resonance frequency of 400 MHz, $^{13}$C-NMR measurement (carbon-type nuclear magnetic resonance measurement), and the like.

[Glass Transition Temperature of Polyester Resin (A)]

The glass transition temperature of the polyester resin (A) used in the present disclosure is -75 to -20°C, preferably -70 to -22°C, more preferably -65 to -24°C, particularly preferably -60 to -26°C, further preferably -55 to -28°C, especially preferably -50 to -30°C, and most preferably -45 to -35°C. If the glass transition temperature is excessively high, there is a tendency that tackiness and adhesive force become insufficient, tensile properties decrease, and processing suitability and molding stability become insufficient. If the glass transition temperature is excessively low, heat resistance and moist heat resistance tend to become insufficient.

The glass transition temperature is measured as follows.

The glass transition temperature can be determined by measurement using a differential scanning calorimeter. The measurement is conducted with a measurement temperature range of - 90 to 100°C and a temperature increase rate of 10°C/min.

[Acid Value of Polyester Resin (A)]

In the present disclosure, the polyester resin (A) is crosslinked by the polyepoxy compound (B) and has carboxy groups as crosslinking points.

The acid value of the polyester resin (A) is 1.5 to 30 mg KOH/g, preferably 2 to 20 mg KOH/g, particularly preferably 2.5 to 15 mgKOH/g, further preferably 3 to 12 mg KOH/g, especially preferably 3.5 to 10 mg KOH/g, and most preferably 4 to 8 mg KOH/g. If the acid value is excessively low, the number of crosslinking points decreases, resulting in insufficient heat resistance. If the acid value is excessively high, the number of crosslinking points is excessively large, resulting in insufficient adhesive force and molding stability, or an excessively-large amount of the polyepoxy compound (B) will be required for the crosslinking, resulting in insufficient optical properties.

The definition of acid value and the measurement method are described below.

An acid value (mg KOH/g) can be determined by dissolving 1 g of the polyester resin (A) in 30 g of a toluene/methanol mixed solvent (e.g., toluene/methanol = 7/3 by volume) using neutralization titration according to JIS K 0070.

In the present disclosure, the acid value of the polyester resin (A) emanates from the content of the carboxy groups in the resin.

[Hydroxyl Value of Polyester Resin (A)]

Further, the hydroxyl value of the polyether resin (A) is preferably 10 mg KOH/g or less, particularly preferably 5 mg KOH/g or less, further preferably 3 mg KOH/g or less, more preferably 2 mg KOH/g or less, especially preferably 1 mg KOH/g or less, and most preferably 0.5 mg KOH/g or less. If the hydroxyl value is excessively high, the number of crosslinking points with the polyepoxy compound (B) decreases, and the heat resistance and moist heat resistance tend to become insufficient.

The hydroxyl value of the polyester resin (A) is determined by neutralization titration according to JIS K 0070.

[Ester Bond Concentration of Polyester Resin (A)]

The ester bond concentration of the polyester resin (A) used in the present disclosure is preferably 1.5 to 8 mmol/g, more preferably 2 to 7.5 mmol/g, further preferably 2.5 to 7 mmol/g, particularly preferably 3 to 6.5 mmol/g, especially preferably 3.5 to 6 mmol/g, and most preferably 4 to 5.5 mmol/g.

If the ester bond concentration is excessively high, the heat resistance and moist heat resistance tend to become insufficient. If the ester bond concentration is excessively low, the compatibility with the polyepoxy compound (B) tends to decrease and optical properties become insufficient.

The definition of ester bond concentration and the measurement method are described below.

The ester bond concentration (mmol/g) means the molar amount of ester bonds present in 1 g of the polyester resin (A), which is determined, for example, by calculation on the amount of a fed ingredient. The calculation method is finding a value by dividing the smaller molar amount of the feeding amounts of the polyvalent carboxylic acid (a) and the polyhydric alcohol (b) by the mass of the total polyester resin (A). The calculation formula is shown below.

If the feeding amounts of the polyvalent carboxylic acid (a) and the polyhydric alcohol (b) have the same molar amount, either of the following formulas may be used.

Further, the calculation method needs to be changed accordingly when a monomer having both carboxy groups and hydroxyl groups is used, or when polyester is made from caprolactone, or the like.

(When the amount of polyvalent carboxylic acid (a) is less than the amount of polyhydric alcohol (b)) Ester group concentration (mmol/g) = $[(A1/a1 \times m1 + A2/a2 \times m2 + A3/a3 \times m3 ...) / Z] \times 1000$

A: feeding amount (g) of polyvalent carboxylic acid (a)
a: molecular weight of polyvalent carboxylic acid (a)
m: number of carboxy groups per molecule of polyvalent carboxylic acid (a)
Z: mass (g) of resulting product

(When the amount of polyhydric alcohol (b) is less than the amount of polyvalent carboxylic acid (a)) Ester group concentration (mmol/g) = $[(B1/b1 \times n1 + B2/b2 \times n2 + B3/b3 \times n3...) / Z] \times 1000$

B: feeding amount (g) of polyhydric alcohol (b)
b: molecular weight of polyhydric alcohol (b)
n: number of hydroxyl groups per molecule of polyhydric alcohol (b)
Z: mass (g) of resulting product

The ester bond concentration can also be determined by known methods using NMR or the like, such as $^1$H-NMR measurement (proton-type nuclear magnetic resonance measurement) at a resonance frequency of 400 MHz, $^{13}$C-NMR measurement (carbon-type nuclear magnetic resonance measurement).

[Peak-Top Molecular Weight (Mp) and Weight Average Molecular Weight (Mw) of Polyester Resin (A)]

The peak-top molecular weight (Mp) of the polyester resin (A) is preferably 5000 to 150000, more preferably 10000 to 120000, particularly preferably 20000 to 100000, further preferably 30000 to 90000, especially preferably 40000 to 80000.

If the peak-top molecular weight (Mp) is excessively low, the cohesive force becomes insufficient, and the heat resistance and moist heat durability tend to become insufficient. Further, if the peak-top molecular weight (Mp) is excessively high, there is a tendency that the adhesive force becomes insufficient and the compatibility with the polyepoxy compound (B) decreases, resulting in insufficient optical properties.

The weight average molecular weight (Mw) of the polyester resin (A) is preferably 5000 to 500000, more preferably 10000 to 300000, particularly preferably 20000 to 200000, further preferably 30000 to 150000, and especially preferably 50000 to 130000.

If the weight average molecular weight (Mw) is excessively low, the cohesive force becomes insufficient, and the heat resistance and moist heat durability tend to become insufficient. Further, if the weight average molecular weight (Mw) is excessively high, there is a tendency that the adhesive force becomes insufficient and the compatibility with the polyepoxy compound (B) decreases, resulting in insufficient optical properties.

The peak-top molecular weight (Mp) and the weight average molecular weight (Mw) are measured as follows.

The peak-top molecular weight (Mp) and the weight average molecular weight (Mw) are determined on standard polystyrene molecular weight through measurement with high-performance liquid chromatograph (HLC-8320GPC, available from Tosoh Corporation) with the use of two columns (TSKgel SuperMultipore HZ-M (each having an exclusion limit molecular weight of $2\times10^6$ and a theoretical plate number of 16000 per column, and filled with a column packing material of styrene-divinylbenzene copolymer having a particle diameter of 4 $\mu$m)) connected in series.

Further, in the present disclosure, the polyester resin (A) is preferably an amorphous polyester resin in terms of solvent solubility and solution stability, tackiness, and optical properties. If the polyester resin (A) is crystalline, the solvent solubility, solution stability, tackiness, molding stability, and optical properties tend to become insufficient.

The aforementioned amorphous property can be confirmed by a differential scanning calorimeter. For example, the amorphous state lacks an endothermic peak due to crystal fusion when measurement is conducted in a temperature range of -90 to 400°C and a temperature increase rate of 10°C/min. The measurement temperature range and the temperature increase rate can be changed as appropriate depending on the sample.

The crystal fusion heat of the polyester resin (A), when crystallized, is preferably 35 J/g or less, preferably 20 J/g or less, particularly preferably 10 J/g or less, especially preferably 5 J/g or less, more preferably 3 J/g or less, and most preferably 1 J/g or less. When the crystal fusion heat is 0 J/g, the polyester resin (A) is amorphous, which is preferable in terms of solvent solubility and solution stability, tackiness, and optical properties.

Further, the polyester resin (A) is preferably made from a plant-derived raw material and has a biomass degree in order to reduce the burden on the global environment.

The biomass degree of the polyester resin (A) is preferably 10% or more, more preferably 20% or more, particularly preferably 30% or more, further preferably 40% or more, especially preferably 50% or more, and most preferably 60% or more. The upper limit is 100%. If the biomass degree is low, reduction of the burden on the global environment tends to be insufficient.

The biomass degree of the polyester resin (A) is the mass ratio of the portion of a plant-derived raw material used in the production of the polyester resin (A) incorporated in the resin relative to the total mass of the polyester resin (A), and is calculated as follows. The biomass degrees of the polyvalent carboxylic acid (a) and the polyhydric alcohol (b) are determined on the weighted averages of their respective biomass degrees. Further, it is sufficient that any value obtained by one of the following calculation methods falls within the aforementioned range.

Biomass degree (%) =[(molar amount of carbon of plant-derived monomer calculated from the molar ratio of polyvalent carboxylic acid (a) and polyhydric alcohol (b) in polyester resin      (Calculation Method) (A)) / (molar amount of carbon of all constituent monomers in polyester resin (A))] $\times$ 100

Further, the biomass degree can also be determined by analyzing the composition ratio by NMR, and performing calculation according to (the carbon number of the plant-derived monomer) / (the total carbon number of the entire resin).

Furthermore, the biomass degree can also be measured by the method described in "A Speciation of Bio-Fuel by Easy C-14 Measurement" in Report No. 4 (2009) of the Tokyo Metropolitan Industrial Technic Institute.

Further, in the present disclosure, the polyester resin (A) is preferably soluble in non-petroleum organic solvents and non-aldehyde organic solvents from the viewpoint of VOC emission control. Insufficient solubility in these organic solvents tends to increase the burden on the human body and the global environment, cause difficulties in the preparation of the present adhesive composition, or result in insufficient solution stability after dissolution.

Examples of the non-petroleum organic solvents and non-aldehyde organic solvents include ketone solvents such as methyl ethyl ketone, methyl isobutyl ketone, or cyclohexanone; alcohol solvents such as methyl alcohol, ethyl alcohol, isopropyl alcohol, or isobutyl alcohol; ester solvents such as ethyl acetate or normal butyl acetate; acetate solvents such as cellosolve acetate, or methoxy acetate; mixtures of two or more of these solvents, and the like. Among these, the ketone solvents and the ester solvents are preferable, and methyl ethyl ketone, cyclohexanone, and ethyl acetate are more preferable, and methyl ethyl ketone and ethyl acetate are further preferable because of their low boiling points and excellent drying efficiency.

<Polyepoxy Compound (B)>

The present adhesive composition further contains the polyepoxy compound (B) as a crosslinker.

Since the present adhesive composition contains the polyepoxy compound (B), the epoxy groups in the polyepoxy compound (B) react with the carboxy groups in the polyester resin (A) to cause crosslinking (curing), thereby producing an adhesive with excellent heat resistance as well as excellent adhesive force. The "polyepoxy compound (B)" refers to a compound having at least two or more epoxy groups in the molecule.

Examples of the polyepoxy compound (B) include glycidyl amine type, such as tetraglycidyl diamino diphenylmethane, triglycidyl para-aminophenol, tetraglycidyl bisamino methylcyclohexane, or N,N,N',N'-tetraglycidyl-m-xylenediamine; bifunctional glycidyl ether type, such as bisphenol A diglycidyl ether, bisphenol S diglycidyl ether, or brominated bisphenol A diglycidyl ether; polyfunctional glycidyl ether type, such as phenol novolac glycidyl ether, or cresol novolac glycidyl ether; glycidyl ester type such as hexahydrophthalic acid glycidyl ester, or dimer acid glycidyl ester;

alicyclic or aliphatic epoxides, such as triglycidyl isocyanurate, 3,4-epoxy cyclohexyl methyl carboxylate, epoxidized polybutadiene, or epoxidized soybean oil; and the like. One or more kinds of these polyepoxy compounds (B) can be used.

The present adhesive composition preferably contains a polyepoxy compound containing nitrogen atoms (nitrogen atom-containing polyepoxy compound) as the polyepoxy compound (B) from the viewpoint of ensuring curing of the coating film of the adhesive composition at a low temperature. Particularly preferable examples include aromatic glycidylamine type polyepoxy compounds, such as tetraglycidyl diamino diphenylmethane, or triglycidyl para-aminophenol; aliphatic glycidylamine type polyepoxy compounds, such as 1,3-bis(N,N-diglycidyl aminomethyl)cyclohexane, or N,N,N',N'-tetraglycidyl-m-xylenediamine. Among these, the aliphatic glycidylamine type polyepoxy compounds, such as 1,3-bis(N,N-diglycidyl aminomethyl)cyclohexane and N,N,N',N'-tetraglycidyl-m-xylenediamine are preferable because of their excellent low-temperature-curing properties.

The equivalent amount of the epoxy groups in the polyepoxy compound (B) relative to the carboxy groups in the polyester resin (A) is preferably 0.3 to 5 equivalents, more preferably 0.5 to 4 equivalents, further more preferably 0.7 to 3.5 equivalents, further preferably 0.9 to 3.0 equivalents, particularly preferably 1.0 to 2.8 equivalents, especially preferably 1.2 to 2.6 equivalents, further especially preferably 1.4 to 2.4 equivalents, and most preferably 1.6 to 2.2 equivalents.

If the equivalent amount is excessively large, the residual polyepoxy compound (B), which is not incorporated in the crosslinking, remains, and the optical properties and heat resistance tend to become insufficient. Further, if the equivalent amount is excessively small, the crosslinking density decreases, and the heat resistance, moist heat resistance, and adhesive force tend to become insufficient.

The equivalent amount of the epoxy groups relative to the carboxy groups (COOH) is determined on the acid value of the polyester resin (A) and the epoxy equivalent amount (g/eq) of the polyepoxy compound (B) blended, according to the following formula.

$$\text{Equivalent amount of epoxy groups relative to COOH} = (e \div WPE) / (AV \div 56.1 \div 1000 \times P)$$

e: mass (g) of polyepoxy compound (B) blended
WPE: epoxy equivalent amount (g/eq) of polyepoxy compound (B)
AV: acid value (mg KOH/g) of polyester resin (A)
P: mass (g) of polyester resin (A) blended

The epoxy equivalent amount (WPE) of the polyepoxy compound (B) is preferably 500 g/eq or less, more preferably 350 g/eq or less, further preferably 250 g/eq or less, particularly preferably 200 g/eq or less, and especially preferably 150 g/eq or less. If the epoxy equivalent amount of the polyepoxy compound (B) is excessively large, the crosslinking density after curing decreases and the heat resistance becomes insufficient, or a large amount of the polyepoxy compound (B) needs to be added to increase the crosslinking density, which tends to result in insufficient optical properties. The lower limit of the epoxy equivalent amount (WPE) of the polyepoxy compound (B) is usually 50 g/eq or higher.

In the present disclosure, "epoxy equivalent amount (WPE)" is defined as "the mass of epoxy resin containing one equivalent amount of epoxy groups", which can be measured according to JIS K 7236.

The amount of the epoxy compound (B) to be blended is preferably 0.1 to 15 parts by mass, more preferably 0.2 to 10 parts by mass, further preferably 0.3 to 5 parts by mass, particularly preferably 0.5 to 4.5 parts by mass, further especially preferably 0.7 to 4 parts by mass, and most preferably 1 to 3.5 parts by mass, relative to 100 parts by mass of the polyester resin (A). If the amount of the polyepoxy compound (B) to be blended is excessively large, the residual polyepoxy compound (B), which is not incorporated in the crosslinking, remains, and the optical properties and heat resistance tend to become insufficient. Further, if the amount of the polyepoxy compound (B) to be blended is excessively small, the crosslinking density decreases, and the heat resistance, moist heat resistance, and adhesive force tend to become insufficient.

<Polyisocyanate Compound (C)>

The present adhesive composition may contain a polyisocyanate compound (C) as a crosslinker from the viewpoint of moist heat resistance. The polyisocyanate compound (C) refers to a compound having at least two or more isocyanate groups in the molecule.

Examples of the polyisocyanate compound (C) include tolylene diisocyanate compounds, such as 2,4-tolylenediisocyanate or 2,6-tolylenediisocyanate; xylylene diisocyanate compounds, such as 1,3 xylylene diisocyanate; diphenylmethane compounds, such as diphenylmethane-4,4-diisocyanate; aromatic diisocyanate compounds, such as naphthalene diisocyanate crosslinkers of such as 1,5-naphthalene diisocyanate; alicyclic diisocyanate compounds, such as isophorone diisocyanate, 1,4-cyclohexane diisocyanate, 4,4'-dicyclohexylmethane diisocyanate, methylcyclohexane diisocyanate, isopropylidene dicyclohexyl-4,4'-diisocyanate, 1,3-diisocyanatomethyl cyclohexane, or norbornane diisocyanate; aliphatic diisocyanate compounds, such as hexamethylene diisocyanate or trimethyl hexamethylene diisocyanate; adducts, biurets, and isocyanurates of the aforementioned aromatic diisocyanate compounds, alicyclic diisocyanate compounds, and aliphatic diisocyanate compounds; and the like. The polyisocyanate compound (C) to be used may have an isocyanate moiety blocked with phenol, lactam, or the like. These polyisocyanate compounds (C) may be used individually or in a combination of two or more. Among these, from the viewpoint of optical properties and heat resistance, the alicyclic diisocyanate compounds and aliphatic diisocyanate compounds are preferable, and aliphatic diisocyanate compounds are especially preferable, and isocyanurate forms of hexamethylene diisocyanate are further preferable.

The equivalent amount of the isocyanate groups in the polyisocyanate compound (C) relative to the hydroxyl groups in the polyester resin (A) is preferably 3 equivalents or less, more preferably 2 equivalents or less, further preferably 1.5 equivalents or less, particularly preferably 1 equivalent or less, and especially preferably 0.5 equivalents or less.

If the equivalent amount of the isocyanate groups in the polyisocyanate compound (C) relative to the hydroxyl groups in the polyester resin (A) is excessively large, the residual polyisocyanate compound (C), which is not incorporated in the crosslinking, remains, and the optical properties may become insufficient, or heat resistance may become insufficient due to a high concentration of urethane bonds.

When the present adhesive composition contains the polyisocyanate compound (C), the content thereof is preferably 5 parts by mass or less, more preferably 4 parts by mass or less, further preferably 3 parts by mass or less, particularly preferably 2 parts by mass or less, especially preferably 1.5 parts by mass or less, and most preferably 1 part by mass or less, relative to 100 parts by mass of the polyester resin (A). If the addition amount of the polyisocyanate compound is excessively large, the residual polyisocyanate compound (C), which is not incorporated in the crosslinking, remains, and the optical properties may become insufficient, or heat resistance tends to decrease due to a high concentration of urethane bonds.

<Carbodiimide Compound>

The present adhesive composition may contain a carbodiimide compound from the viewpoint of moist heat resistance.

As the carbodiimide compound, a known carbodiimide having one or more carbodiimide groups (-N=C=N-) in the molecule can usually be used. However, in order to improve the durability in a high-temperature and high-humidity environment, a compound containing two or more carbodiimide groups in the molecule, i.e., a polyvalent carbodiimide compound, is preferable, and compounds containing three or more carbodiimide groups, further, five or more carbodiimide groups, especially seven or more carbodiimide groups in the molecule, are particularly preferable. However, the number of carbodiimide groups in the molecule is typically not greater than 50. If the number of the carbodiimide groups is excessively large, the molecular structure has an excessively great size, thereby reducing the compatibility, and the optical properties tend to become insufficient. Further, a high-molecular weight polycarbodiimide prepared by a decarbonation condensation reaction of a diisocyanate in the presence of a carbodiimidization catalyst may also be used.

Examples of the high-molecular weight polycarbodiimide include those obtained by decarbonation condensation reaction of the following diisocyanates. Examples of the diisocyanates include 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenylether diisocyanate, 3,3'-dimethyl-4,4'-diphenyl ether diisocyanate, 2,4-tolylenediisocyanate, 2,6-tolylenediisocyanate, 1-methoxyphenyl-2,4-diisocyanate, isophorone diisocyanate, 4,4'-dicyclohexylmethane diisocyanate, tetramethylxylylene diisocyanate, and the like. These can be used alone or in combination of two or more.

When the present adhesive composition contains a carbodiimide compound, the content thereof is preferably 5 parts by mass or less, more preferably 4 parts by mass or less, further preferably 3 parts by mass or less, particularly preferably 2 parts by mass or less, especially preferably 1 part by mass or less, and most preferably 0.5 parts by mass or less, relative to 100 parts by mass of the polyester resin (A). If the addition amount of the carbodiimide compound is excessively large, an excess amount of the carbodiimide compound that is not incorporated in the crosslinking remains, resulting in insufficient optical properties, or the crosslinking between the polyester resin (A) and the polyepoxy compound (B) tends to be interfered, resulting in insufficient heat resistance.

<Metal Chelate Compound>

The present adhesive composition may contain a metal chelate compound as a crosslinker from the viewpoint of moist heat resistance. Examples of the metal chelate compound include metal alkoxides, such as tetraethyl titanate, tetraethyl zirconate, or aluminum isopropionate; metal chelate compounds or the like of acetylacetone, acetoacetate esters, ethylenediamine tetraacetic acid coordination compound of polyvalent metals such as aluminum, iron, copper, zinc, tin, titanium, nickel, antimony, magnesium, vanadium, chromium, or zirconium; acetate-ammonium complex salts, ammonium-carbonate complex salts, and the like. One or more of these metal chelate compounds can be used.

When the present adhesive composition contains a metal chelate compound, the content thereof is preferably 5 parts by mass or less, more preferably 4 parts by mass or less, further preferably 3 parts by mass or less, particularly preferably 2 parts by mass or less, especially preferably 1 part by mass or less, and most preferably 0.5 parts by mass or less, relative to 100 parts by mass of the polyester resin (A). If the addition amount of the metal chelate compound is excessively large, residual metal chelate compound, which is not incorporated in the crosslinking, remains, resulting in insufficient optical properties, or the crosslinking between the polyester resin (A) and the polyepoxy compound (B) tends to be interfered, resulting in insufficient heat resistance.

<Tackifier Resin>

The present adhesive composition may contain a tackifier resin to improve adhesive properties.

The tackifier resin is not particularly limited, and any previously-known resins can be used.

Examples of the tackifier resin include hydrocarbon resins, terpene resins, phenolic resins, rosin resins, xylene resins, epoxy resins, polyamide resins, ketone resins, elastomer resins, and the like. These resins may be used individually, or in a combination of two or more. Among these, hydrocarbon tackifier resins and terpene resins are preferable in terms of their compatibility with the polyester resin (A) and excellent heat resistance.

Examples of the hydrocarbon tackifier resin include various hydrocarbon resins, such as aliphatic hydrocarbon resins, aromatic hydrocarbon resins, alicyclic hydrocarbon resins, aliphatic/aromatic petroleum resins (styrene-olefin copolymer and the like), aliphatic/alicyclic petroleum resins, hydrogenated hydrocarbon resins, coumarone resins, coumarone indene resins, and the like.

Examples of the terpene resin include terpene resins, terpene phenol resins, aromatic modified terpene resins, and the like. Specific examples include $\alpha$-pinene polymer, $\beta$-pinene polymer, dipentene polymer, and modified terpene resins prepared by phenol modification, aromatic modification, hydrogenation modification, and hydrocarbon modification of any of these polymers. Further, terpene phenolic resins are preferable in terms of their compatibility with the polyester resin (A) and excellent heat resistance.

Examples of the phenolic resin include condensation products of phenol compounds such as phenol, m-cresol, 3,5-xylenol, p-alkylphenol, resorcinol, or the like, with formaldehyde. Other examples of the phenolic resin include resol obtained by addition reaction of any of the phenol compounds with formaldehyde in the presence of an alkali catalyst, novolac obtained by condensation reaction of any of the phenol compounds with formaldehyde in the presence of an acid catalyst, rosin-modified phenol resin obtained by adding phenol to a rosin compound such as unmodified rosin, modified rosin, or derivative of any of these rosins in the presence of an acid catalyst, followed by thermal polymerization, and the like.

Examples of the rosin resin include rosin resins, polymerized rosin resins, hydrogenated rosin resins, rosin ester resins, hydrogenated rosin ester resins, rosin phenol resins, polymerized rosin esters, and the like. Specific examples include unmodified rosins (raw rosins) such as gum rosin, wood rosin, or tall oil rosin, chemically modified rosins prepared by hydrogenation, disproportionation, and polymerization of any of these unmodified rosins, and derivatives of any of these rosins.

The tackifier resin preferably has an acid value of 30 mg KOH/g or less, particularly preferably 15 mg KOH/g or less, further preferably 10 mg KOH/g or less, especially preferably 6 mg KOH/g or less, and most preferably 3 mg KOH/g, from the viewpoint of moist heat resistance. When multiple types of tackifier resins are used in combination, their average preferably falls within the aforementioned range.

The softening point (measured, for example, by a ring and ball method) of the tackifier resin is preferably 60 to 170°C, particularly preferably 80 to 160°C, and more preferably 100 to 150°C. Such a softening point within the aforementioned range is preferable as it can improve tackiness and adhesive force.

Further, the tackifier resin is preferably a plant-derived resin in light of protection of global environment. Examples of the plant-derived tackifier resins include terpene resins and rosin resins.

When the present adhesive composition contains a tackifier resin, the content thereof is preferably 50 parts by mass or less, more preferably 30 parts by mass or less, further preferably 15 parts by mass or less, particularly preferably 10 parts by mass or less, and especially preferably 5 parts by mass or less, relative to 100 parts by mass of the polyester resin (A). When the content falls within the aforementioned range, the tackiness and adhesive force can be improved, which is desirable. When the content is excessively large, the glass transition temperature of the adhesive increases, and the tackiness, adhesive force, and molding stability tend to become insufficient.

[Catalyst]

The present adhesive composition may contain a catalyst that advances crosslinking (curing) by the polyepoxy compound (B) at a lower temperature.

Examples of the catalyst include imidazole compounds, such as 2-methylimidazole, 1,2-dimethylimidazole, 2-ethyl-4-methylimidazole, 2-phenyl-4-methylimidazole, or 1-cyanoethyl-2-ethyl-4-methylimidazole; tertiary amines, such as triethylamine, triethylenediamine, N'-methyl-N-(2 dimethylaminoethyl)piperazine, 1,8-diazabicyclo(5,4,0)-undecen-7, or 1,5-diazabicyclo(4,3,0)-nonene-5,6-dibutylamino-1,8-diazabicyclo(5,4,0)-undecen-7; compounds obtained by producing amine salts from these tertiary amines with phenol, octylic acid, quaternized tetraphenylborate salts, or the like; cationic catalysts, such as triarylsulfonium hexafluoroantimonate, or diaryliodonium hexafluoroantimonate; triphenylphosphine; and the like. Among these, the tertiary amines, such as 1,8-diazabicyclo(5,4,0)-undecen-7, or 1,5-diazabicyclo(4,3,0)-nonene-5,6-dibutylamino-1,8-diazabicyclo(5,4,0)-undecen-7; compounds obtained by producing amine salts from these tertiary amines with phenol, octylic acid, quaternized tetraphenylborate salts, or the like, are preferable in terms of thermosetting property, heat resistance, adhesion to metals, and storage stability after compounding. One or more kinds of these catalysts can be used.

When the present adhesive composition contains a catalyst, the amount of the catalyst to be blended is preferably 0.01 to 1 part by mass relative to 100 parts by mass of the polyester resin (A). When the content is within the aforementioned range, the reaction between the polyester resin (A) and the polyepoxy compound (B) can be carried out at a low temperature and in a short time to obtain an adhesive with a high degree of crosslinking.

<Antioxidant (D)>

The present adhesive composition preferably contains an antioxidant (D) from the viewpoint of increasing the heat resistance of the polyester resin (A).

Examples of the antioxidant (D) include hindered phenol antioxidants, amine antioxidants, sulfur antioxidants, phosphoric acid antioxidants, and the like. Among these, at least one selected from the hindered phenol antioxidants, the amine antioxidants, and the phosphoric acid antioxidants is preferred as the antioxidant (D), and a hindered phenol compound antioxidant is particularly preferred as the antioxidant (D).

Examples of the hindered phenol antioxidants include an antioxidant having a hindered phenol structure such that a large sterically hindering group (e.g., tertiary-butyl group) is bonded to at least one of the carbon atoms adjacent to a carbon atom of an aromatic ring to which a hydroxyl group of phenol is bonded.

When the present adhesive composition contains the antioxidant (D), the content thereof is preferably 0.001 to 5 parts by mass, more preferably 0.01 to 3 parts by mass, further preferably 0.02 to 2 parts by mass, particularly preferably 0.03 to 1 part by mass, especially preferably 0.05 to 0.5 parts by mass, relative to 100 parts by mass of the polyester resin (A).

If the content is excessively small, the heat resistance tends to become insufficient, and if the content is excessively large, the optical properties tend to become insufficient.

<Adhesive Composition>

In addition to the polyester resin (A), the polyepoxy compound (B), the polyisocyanate compound (C), the carbodiimide compound, the metal chelate compound, the catalyst, the tackifier resin, and the antioxidant (D) described above, the present adhesive composition may contain other components to the extent not detrimental to the effect of the present disclosure. Examples of other components include plasticizers, UV absorbers, stabilizers, antistatic agents, silane coupling agents, fluxes, flame retardants, dispersants, emulsifiers, antifoaming agents, leveling agents, ion trapping agents, inorganic or organic fillers, metal powders, powders such as pigments, particulate additives, and the like. These components can be used individually or in a combination of two or more. Further, the present adhesive composition may also contain a small amount of impurities, or the like, contained in the raw materials or the like used for the production of the components of the present adhesive composition.

When the present adhesive composition contains the additives described above, the content thereof is preferably 70 mass % or less, more preferably 0.001 to 50 mass %, particularly preferably 0.005 to 30 mass %, and further preferably 0.01 to 10 mass %, relative to the entire adhesive composition.

The content of the polyester resin (A) in the present adhesive composition is usually 70 mass % or more, more preferably 80 to 99.5 mass %, particularly preferably 85 to 99 mass %, further preferably 90 to 98.5 mass %, and especially preferably 95 to 98 mass %.

The present adhesive composition can be obtained, for example, by preparing the polyester resin (A), the polyepoxy compound (B), and other necessary optional components, and the like, and blending and dispersing them during the production of the polyester resin (A), or by blending them into a solution of the polyester resin (A) dissolved in an organic solvent, followed by dispersion using a mixing roller or the like.

<Solvent>

The present adhesive composition may contain a solvent to moderately adjust the viscosity of the present adhesive composition and to facilitate handling when a coating film is formed. The solvent is used to ensure handleability and workability during the molding of the present adhesive composition, and the amount to be used is not particularly limited.

Examples of the solvent include ketones, such as acetone, methyl ethyl ketone, methyl isobutyl ketone, or cyclohexanone; esters, such as ethyl acetate; ethers, such as ethylene glycol monomethyl ether; amides, such as N,N-dimethylformamide or N,N-dimethylacetamide; alcohols, such as methanol or ethanol; alkanes, such as hexane or cyclohexane; aromatic compounds, such as toluene or xylene; and the like. Among these, the ketone solvents and the ester solvents are preferable from the viewpoint of VOC emission control, and methyl ethyl ketone, cyclohexanone, and ethyl acetate are particularly preferable, and methyl ethyl ketone and ethyl acetate are further preferable because of their low boiling points and excellent drying efficiency. Only one of the solvents listed above may be used, or two or more of them may be mixed in any combination and mixing ratio.

<Adhesive>

The polyester adhesive according to one embodiment of the present disclosure (this adhesive may be referred to as "the present adhesive" hereinafter) is obtained by crosslinking the present adhesive composition, and has excellent adhesive force, heat resistance, moist heat resistance, and optical properties.

The term "crosslinking" in the present disclosure means intentional crosslinking of the adhesive composition by heat and/or light, etc. The degree of crosslinking can be controlled according to the desired physical properties and usage.

The degree of the crosslinking can be confirmed by the gel fraction of the present adhesive, and the gel fraction is preferably 20 to 100%, more preferably 30 to 98%, further preferably 40 to 95%, particularly preferably 50 to 90%, especially preferably 55 to 85%, and most preferably 60 to 80%. If the gel fraction is excessively low, the heat resistance, holding force, adhesive force, and moist heat durability tend to become insufficient, and if the gel fraction is excessively large, the tackiness and adhesive force tend to become insufficient.

The gel fraction is a measure of the degree of crosslinking, and is calculated, for example, by the following method. An adhesive sheet (provided with no release sheet) which includes a polymer sheet (e.g., a PET film) as a substrate and an adhesive layer formed on the polymer sheet is wrapped with a 200-mesh SUS wire net, and immersed in toluene at 23°C for 24 hours. The mass percentage of an insoluble component of the adhesive remaining in the wire net after the immersion with respect to the mass of the adhesive component before the immersion is defined as the gel fraction. The mass of the substrate is preliminarily subtracted from the mass of the adhesive sheet.

Then, an adhesive layer is formed from the present adhesive, and an adhesive sheet with such an adhesive layer can be obtained.

In the present disclosure, "a sheet" refers to "a film" or "a tape" as well.

<Adhesive Sheet>

An adhesive sheet according to one embodiment of the present disclosure (this adhesive sheet may be referred to as "the present adhesive sheet", hereinafter) can be fabricated, for example, as follows.

Any known adhesive sheet production methods may be employed for the production of the adhesive sheet. The production of the adhesive sheet is performed, for example, by applying the present adhesive composition onto a substrate, drying and crosslinking the adhesive composition, bonding a release sheet to the adhesive layer on a surface opposite to the surface with the substrate, followed by aging as required. As a result, the present adhesive sheet with the adhesive layer containing the adhesive on the substrate is obtained.

Such adhesive layers are preferably formed on one or both sides of the substrate.

Further, the present adhesive sheet may be obtained also by applying the present adhesive composition onto a release sheet, drying and crosslinking the adhesive composition, bonding a substrate to the adhesive layer on a surface opposite to the surface with the release sheet, followed by aging as required.

Further, a substrate-less double-sided adhesive sheet can be produced by forming an adhesive layer on a release sheet, and bonding another release sheet to an opposite surface of the adhesive layer.

The present adhesive sheet or the substrate-less double-sided adhesive sheet thus obtained is used by peeling off the release sheet from the adhesive layer and bonding the adhesive layer and the adherend together.

Examples of the substrate include sheets made of at least one synthetic resin selected from the group consisting of polyester resins, such as polyethylene naphthalate, polyethylene terephthalate, polybutylene terephthalate, or polyethylene terephthalate/isophthalate copolymers; polyolefin resins, such as polyethylene, polypropylene, or polymethylpentene; polyfluoroethylene resins, such as polyvinyl fluoride, polyvinylidene fluoride, or polyfluoroethylene;

polyamides, such as nylon 6 or nylon 6,6; vinyl polymers, such as polyvinyl chloride, polyvinyl chloride/vinyl acetate copolymers, ethylene/vinyl acetate copolymers, ethylene/vinyl alcohol copolymers, polyvinyl alcohol, or vinylon; cellulose resins, such as cellulose triacetate or cellophane; acrylic resins, such as polymethyl methacrylate, polyethyl methacrylate, polyethyl acrylate, or polybutyl acrylate; fluororesin; polystyrene; polycarbonate; acrylonitrile-butadiene-styrene copolymers; acrylonitrile-styrene-acrylic acid ester copolymers; polyarylate; polyimide; cycloolefin polymers; urethane acrylate resin; and the like; metal foils of such as aluminum, copper, and iron; paper such as high-quality paper and glassine paper; and woven and nonwoven fabrics made of glass fibers, natural fibers, synthetic fibers, and the like. Each of these substrates may be in the form of a single layer body, or may be in the form of a multi-layered body including two or more of these substrates laminated together.

Among these, substrates made of polyethylene terephthalate, acrylic resin, polycarbonate, acrylonitrile-butadiene-styrene copolymer, acrylonitrile-styrene-acrylic acid ester copolymer, polyimide, and urethane acrylate resin are especially preferable, and substrates made of acrylic resin, fluororesin, and urethane acrylate resin are particularly preferable because of their excellent heat resistance and molding processability.

Further, foam substrates, e.g., foam sheets of synthetic resin foams, such as polyurethane foam, polyethylene foam, and polyacrylate foam, are also usable as the substrate. Among these, the polyurethane foam and the polyacrylate foam are preferable because the heat resistance, the conformability to the adherend, and the adhesive strength can be properly balanced.

The thickness of the substrate is preferably, for example, 1 to 1000 $\mu$m, particularly preferably 10 to 800 $\mu$m, further preferably 25 to 600 $\mu$m, and especially preferably 50 to 400 $\mu$m.

As the release sheet, for example, a sheet, paper, cloth, nonwoven fabric, and the like, which are treated to be releasable, made of the various synthetic resins exemplified for the substrate above can be used. Silicone release sheets are preferable as the release sheet.

Examples of the method for applying the present adhesive composition include a method using a gravure roll coater, reverse roll coater, kiss roll coater, dip roll coater, bar coater, knife coater, spray coater, comma coater, or the like.

For the aging treatment, the aging temperature is typically 0 to 80°C, and the aging period is typically 1 to 30 days. Specifically, the aging treatment is performed, for example, at 23°C for 1 to 20 days, preferably at 23°C for 2 to 14 days, particularly preferably at 23°C for 3 to 7 days or at 40°C for 1 to 10 days. If the aging treatment is performed at a temperature higher than 80°C, the optical properties of the adhesive sheet tend to become insufficient due to the thermal history, and the production efficiency tends to decrease.

Further, for the drying, the drying temperature is preferably 60 to 140°C, particularly preferably 80 to 120°C, and the drying period is preferably 0.5 to 30 minutes, particularly preferably 1 to 5 minutes.

The thickness of the adhesive layer of the present adhesive sheet and the substrate-less double-sided adhesive sheet is preferably 1 to 500 $\mu$m, particularly preferably 3 to 200 $\mu$m, further preferably 5 to 100 $\mu$m, and especially preferably 10 to 50 $\mu$m. If the thickness of the adhesive layer is excessively thin, the adhesive force tends to decrease, and if the thickness of the adhesive layer is excessively thick, the uniformity of the coating film tends to decrease, resulting in a poor appearance, or bubbles in the coating film tend to cause insufficient optical properties.

The thickness of the adhesive layer is determined by measuring the thickness of the entire adhesive sheet and the thicknesses of constituent layers of the adhesive sheet other than the adhesive layer by means of ID-C112B available from Mitutoyo Corporation, and subtracting the thicknesses of the other constituent layers from the thickness of the entire adhesive sheet thus measured.

The present adhesive sheet preferably has a haze of 3% or less, more preferably 2.5% or less, and particularly preferably 2% or less. With the haze not more than the above values, the optical properties tend to become excellent.

The haze is determined by pressure-bonding of the present adhesive sheet with a polyethylene terephthalate (PET) film and alkali-free glass to make a test piece consisting of PET film, adhesive layer, and alkali-free glass plate. The test piece is then measured under 23°C and 50% RH using HAZE MATER NDH2000 (available from Nippon Denshoku Industries Co., Ltd.).

The molding stability of the present adhesive sheet can be confirmed by the elongation of the adhesive sheet.

The elongation is preferably 100 to 2000%, more preferably 200 to 1500%, further preferably 300 to 1400%, particularly preferably 400 to 1300%, and especially preferably 500 to 1200%.

If the elongation is excessively low, the adhesive layer cannot follow the molded object and the molding stability tends to become insufficient. If the elongation is excessively high, the holding force and moist heat durability tend to become insufficient.

The elongation can be determined by conducting a tensile test of the adhesive sheet according to JIS K 7127.

For example, the elongation can be determined by conducting a tensile test in which a substrate-less adhesive sheet with an adhesive layer thickness of 200 $\mu$m is cut into a size of 15 mm wide and 75 mm long and the release films on both sides are peeled off to make a test piece, and the elongation is measured using an autograph (Autograph AG-X, available from Shimadzu Corporation) at 23°C, 50% RH, with a width of 15 mm, a gauge length of 25 mm, and a tensile speed of 10 mm/min.

Furthermore, the adhesive sheet may be protected by a release sheet provided on the outside of the adhesive layer, if necessary. Further, in the adhesive sheet with its adhesive layer provided on one side of the substrate, a surface of the substrate opposite to the adhesive layer may be treated to be releasable, whereby the adhesive layer can be protected with the releasable surface.

The present adhesive can be used for bonding various members together, and, with its excellent adhesive force, heat resistance, moist heat resistance, and optical properties, is used especially as a single-sided or double-sided adhesive sheet for bonding and molding decorative films, and a film for electronic members.

<Decorative Film>

The decorative film according to one embodiment of the present disclosure (this decorative film may be referred to as "the present decorative film 1" hereinafter) includes the present adhesive sheet.

Further, the decorative film according to another embodiment of the present disclosure (this decorative film may be referred to as "the present decorative film 2" hereinafter) is a decorative film including an adhesive layer formed from a polyester adhesive composition containing the polyester resin (A) and the polyepoxy compound (B).

The polyester resin (A) satisfies all of the following (1) through (4).

(1) the polyester resin (A) has structural units derived from a polyvalent carboxylic acid (a) and structural units derived from a polyhydric alcohol (b);
(2) a content of the structural units derived from a cyclic structure-containing polyvalent carboxylic acid (a1) relative to 100 mol% of the structural units derived from the polyvalent carboxylic acid (a) is 30 mol% or more;
(3) the structural units derived from the polyhydric alcohol (b) include structural units derived from an aliphatic polyhydric alcohol (b1); and
(4) the polyester resin (A) has an acid value of 1.5 to 30 mg KOH/g.

The polyester resin (A) and the polyepoxy compound (B) used in the present decorative film 2 are as described in the description of the present adhesive composition above. Further, the polyester adhesive composition used in the present decorative film 2 may also contain the polyisocyanate compound (C), the carbodiimide compound, the metal chelate compound, the tackifier resin, the antioxidant (D), and additives, described in the description of the present adhesive composition above.

The following describes the present decorative films 1 and 2 (they may be simply referred to as "the present decorative film" hereinafter).

The decorative film described above is used to add design to a resin layer formed from a thermoplastic resin or metal, and the present decorative film includes at least a substrate and an adhesive layer.

Examples of the substrate in the present decorative film includes resin layers formed from a thermoplastic resin. Examples of the thermoplastic resin include polyethylene terephthalate, acrylic resin, polycarbonate, acrylonitrile-butadiene-styrene copolymer, acrylonitrile-styrene-acrylic acid ester copolymer, polyimide acrylic resin, fluororesin, urethane acrylate resin, and the like. These may be used alone, or two or more of them may be used in combination. Among these, the acrylic resin, fluororesin, and urethane acrylate resin are preferable for their excellent extensibility, bendability, and shape-following properties upon the molding process.

The substrate of the present decorative film may be colorless or colored. To add a color to the substrate, known coloring agents can be added to the resin.

Further, the substrate of the present decorative film may be transparent, semitransparent, or opaque.

Usually, the thickness of the substrate is preferably 1 to 1000 $\mu$m, particularly preferably 10 to 800 $\mu$m, further preferably 25 to 600 $\mu$m, and especially preferably 50 to 400 $\mu$m. If the thickness of the substrate falls within the aforementioned range, desirable process moldability, shape-following properties, and handling properties are likely to be ensured when decorative molded products are produced.

The present decorative film may have a decorative layer on the substrate and/or between the substrate and the adhesive layer. The decorative layer is a layer provided to add design to a decorative film, and is a patterned layer that expresses patterns, letters, patterned pictures, and the like. The decorative layer can be provided, for example, by inkjet printing, screen printing, gravure printing, or other known printing methods, or by vapor deposition of aluminum, chromium, nickel, gold, tin, indium, copper, or similar metals or metal oxides.

The substrate of the present decorative film is located at the outermost layer of the decorative molded product after the molded object (described later) is decorated with the present decorative film, and serves as a protective layer for the decorative molded product. By forming the substrate with acrylic resin or urethane acrylate resin, a decorative molded object excellent in durability in terms of abrasion resistance, chemical resistance, weather resistance, and the like, can be obtained.

<Decorative Molded Object>

The decorative molded object according to one embodiment of the present disclosure (this decorative molded object may be referred to as "the present decorative molded object" hereinafter) is formed by bonding the present decorative film onto a molded object by vacuum molding, pressure molding (preferably, vacuum molding), or the like. In other words, the present decorative molded object includes the present decorative film laminated on a molded object; more specifically, the present decorative molded object is obtained by laminating an adhesive layer, a decorative layer if necessary, and a substrate on a molded object.

Examples of the molded object include a resin layer formed from a thermoplastic resin. Examples of the thermoplastic resin include polyethylene terephthalate, acrylic resin, polycarbonate, acrylonitrile-butadiene-styrene copolymer, acrylonitrile-styrene-acrylic acid ester copolymer, and the like.

<Film for Electronic Member>

The film for electronic member according to one embodiment of the present disclosure usually includes the present adhesive sheet and a substrate.

The film for electronic member is used in the production process of electronic members. For example, the film for electronic member is used for masking, fixing, protecting electronic members, and transporting parts during the semiconductor production process.

Examples of the substrate for the film for electronic member include polyethylene terephthalate resin, polyimide resin, polyphenylene sulfide resin, polyethylene naphthalate resin, polyetheretherketone resin, polyethersulfone resin, polycyclohexane dimethylene terephthalate resin, polyetherimide resin, aromatic polyamide resin, liquid crystal polymer resin, and the like. These may be used alone, or two or more of them may be used in combination. Among these, polyethylene terephthalate resin, polyimide resin, and polyphenylene sulfide are preferable for their excellent heat resistance and workability.

Usually, the thickness of the substrate is preferably 1 to 1000 $\mu$m, particularly preferably 3 to 500 $\mu$m, further preferably 5 to 300 $\mu$m, and especially preferably 10 to 100 $\mu$m. If the thickness of the substrate is within the aforementioned range, the film tends to have desirable heat resistance and workability as a film for electromagnetic components.

EXAMPLES

Hereinbelow, the present disclosure is described more specifically by way of examples thereof. It should be understood that the present disclosure be not limited to these examples within the scope of the present disclosure. In the following examples, "parts" and "%" are on mass.

Further, the glass transition temperature (°C), the acid value (mg KOH/g), the content (mol%) of the structural units derived from the cyclic structure-containing polyvalent carboxylic acid (a1) relative to the structural units derived from the polyvalent carboxylic acid (a), the content (mol%) of the structural units derived from the aliphatic polyhydric alcohol (b1) relative to the structural units derived from the polyhydric alcohol (b), the content (mass %) of the structural units derived from the dimer acid (a2) and/or dimer diol (b2) in the polyester resin (A), the ester bond concentration (mmol/g), the crystal fusion heat (J/g), the peak-top molecular weight (Mp), the weight average molecular weight (Mw), and the biomass degree (%) were measured as described herein.

<Production of Polyester Resin (A), (A')>

The compositions listed in Table 1 below are the finished composition ratios (resin composition ratios), which are the relative ratios (molar ratios) and their mass % of the amounts of the constituent monomers of the resulting polyester resins (A), (A').

[Production of Polyester Resin (A-1)]

124 parts of isophthalic acid (IPA), 104.3 parts of terephthalic acid (TPA), 4 parts of trimellitic acid anhydride (TMAn) as the polyvalent carboxylic acid (a), 39 parts of ethylene glycol (EG) as the polyhydric alcohol, 664.2 parts of dimer diol "Pripol 2033" (P2033) (available from Croda), 56.6 parts of 2-methyl-1,3-propanediol (2MPG), and 0.1 part of tetrabutyl titanate as a catalyst were placed in a reaction vessel equipped with a thermometer, a stirrer, a rectifying column, and a nitrogen inlet tube. The temperature was increased over 2.5 hours until the internal temperature was increased to 260°C, and the esterification reaction was carried out at 260°C for 1.5 hours.

Then, 0.1 part of tetrabutyl titanate was added as a catalyst, the pressure in the system was reduced to 2.5 hPa, and the polymerization reaction was performed for 2 hours.

Then, the internal temperature was decreased to 235°C, and 8 parts of trimellitic acid anhydride (TMAn) was added, followed by a depolymerization reaction for 1 hour, thereby obtaining a polyester resin (A-1).

[Production of Polyester Resins (A-2 to A-5, A'-2)]

Polyester resins (A-2 to A-5, A'-2) were obtained in the same manner as that for A-1, except that the resin composition was changed as shown in Table 1.

[Production of Polyester Resin (A'-1)]

225.5 parts of terephthalic acid (TPA) as the polyvalent carboxylic acid (a), 126.4 parts of ethylene glycol (EG) as the polyhydric alcohol (b), 646.4 parts of dimer diol "Pripol 2033" (P2033) (available from Croda), 1.8 parts of trimethylolpropane (TMP), and 0.1 part of tetrabutyl titanate as a catalyst were placed in a reaction vessel equipped with a thermometer, a stirrer, a rectifying column, and a nitrogen inlet tube. The temperature was increased over 2.5 hours until the internal temperature was increased to 260°C, and the esterification reaction was carried out at 260°C for 1.5 hours.

Then, 0.1 part of tetrabutyl titanate was added as a catalyst, the pressure in the system was reduced to 2.5 hPa, and the polymerization reaction was performed for 2 hours, thereby obtaining a polyester resin (A'-1).

The resin composition (structural units derived from the components) of each of the resulting polyester resins is shown in Table 1 below, and various physical properties are shown in Table 2 below. The abbreviations in Table 1 are as follows.

[Polyvalent Carboxylic Acids (a)]
[Cyclic Structure-Containing Polyvalent Carboxylic Acid (a1)]
"IPA": isophthalic acid
"TPA": terephthalic acid
"TMAn": trimellitic acid anhydride
[Dimer Acid (a2)]
"P1009": dimer acid "Pripol 1009" (available from Croda) *biomass-derived raw material
[Aliphatic Polyvalent Carboxylic Acid]
"SebA": sebacic acid *biomass-derived raw material
[Polyhydric Alcohols (b)]
[Aliphatic Polyhydric Alcohol (b1)]
"EG": ethylene glycol *biomass-derived raw material
"2MPG": 2-methyl-1,3-propanediol
"3MPG": 3-methyl-1,5-pentanediol
"TMP": trimethylolpropane
[Dimer Diol (b2)]
"P2033": dimer diol "Pripol 2033" (available from Croda) *biomass-derived raw material

EP 4 497 797 A1

Table 1

| Polyester-Based Resin (A) | | Polyvalent Carboxylic Acid (a) | | | | | | Polyhydric Alcohol (b) | | | | |
|---|---|---|---|---|---|---|---|---|---|---|---|---|
| | | IPA (a1) | TPA (a1) | TMAn (a1) | TMAn (a1) (Depolymerization) | P1009 (a2) | SebA | EG (b1) | 2MPG (b1) | 3MPG (b1) | TMP (b1) | P2033 (b2) |
| A-1 | Molar Ratio | 53.5 | 45.0 | 1.5 | 3.0 | - | - | 3.4 | 6.8 | - | - | 89.8 |
| | Mass% | 11.4 | 9.6 | 0.4 | 0.9 | - | - | 0.3 | 1.0 | - | - | 76.4 |
| A-2 | Molar Ratio | 53.5 | 45.0 | 1.5 | 7.0 | - | - | 3.4 | 6.8 | - | - | 89.8 |
| | Mass% | 11.3 | 9.5 | 0.4 | 2.1 | - | - | 0.3 | 0.9 | - | - | 75.5 |
| A-3 | Molar Ratio | 52.5 | 45.0 | 2.5 | 7.0 | - | - | 10.7 | 19.4 | - | - | 69.9 |
| | Mass% | 12.9 | 11 | 0.7 | 2.5 | - | - | 1.2 | 3.2 | - | - | 68.5 |
| A-4 | Molar Ratio | 38.0 | 30.0 | 2.0 | 4.0 | 30.0 | - | 15.1 | - | 54.9 | - | 30 |
| | Mass% | 10.2 | 8.1 | 0.6 | 1.6 | 32.6 | - | 1.8 | - | 13.0 | - | 32.1 |
| A-5 | Molar Ratio | 33.0 | 30.0 | 2.0 | 1.5 | 35.0 | - | 21.1 | - | 68.9 | - | 10 |
| | Mass% | 10.3 | 9.4 | 0.8 | 0.7 | 44.4 | - | 2.9 | - | 12.5 | - | 19.0 |
| A'-1 | Molar Ratio | - | 100 | - | - | - | - | 9.2 | - | - | 1.0 | 89.8 |
| | Mass% | - | 21.6 | - | - | - | - | 0.9 | - | - | 0.2 | 77.3 |
| A'-2 | Molar Ratio | 18 | - | 2.0 | 1.5 | - | 80 | 24.3 | - | 35.7 | - | 40 |
| | Mass% | 5.5 | - | 0.7 | 0.7 | - | 31.2 | 3.4 | - | 9.6 | - | 48.9 |

23

Table 2

| Polyester-Based Resin (A) | Glass Transition Temperature (°C) | Acid Value (mg KOH/g) | (a1) Content[*1] (mol%) | (b1) Content[*2] (mol%) | (a2) and/or (b2) Content[*3] (mass %) | Ester Bond Concentration (mmol/g) | Crystal Fusion Heat (J/g) | Molecular Weight | | Biomass Degree (%) |
|---|---|---|---|---|---|---|---|---|---|---|
| | | | | | | | | Peak-Top Molecular Weight | Weight Average Molecular Weight | |
| A-1 | -27 | 5.4 | 100 | 10 | 76 | 3.2 | None | 66000 | 99000 | 80 |
| A-2 | -26 | 12.5 | 100 | 10 | 76 | 3.2 | None | 67000 | 100000 | 80 |
| A-3 | -23 | 14.6 | 100 | 30 | 69 | 3.7 | None | 65000 | 118000 | 74 |
| A-4 | -35 | 9.1 | 71 | 70 | 65 | 4.1 | None | 71000 | 98000 | 71 |
| A-5 | -32 | 4.0 | 65 | 90 | 63 | 4.7 | None | 65000 | 103000 | 64 |
| A'-1 | -28 | 0.5 | 100 | 9 | 77 | 3.3 | None | 57600 | 62000 | 80 |
| A'-2 | -52 | 3.9 | 20 | 60 | 49 | 4.6 | 4.0 | 69000 | 132000 | 86 |

*1: Content of structural units derived from cyclic structure-containing polyvalent carboxylic acid (a1) relative to 100 mol% of polyvalent carboxylic acid (a) *2: Content of structural units derived from aliphatic polyhydric alcohol (b1) relative to 100 mol% of polyhydric alcohol (b) *3: Content of structural units derived from dimer acid (a2) and/or structural units derived from dimer diol (b2) relative to the entire polyester-based resin (A)

24

<PET Resin Sheet with Release Film on One Side>

Each of the obtained polyester resins (A) and (A') was applied to a polyethylene terephthalate (PET) film (Toray, Lumirror T60, thickness = 38 $\mu$m) so that the thickness after drying was about 25 $\mu$m, followed by drying at 100°C for 3 minutes to form an adhesive layer. Thereafter, a PET film (release film) (SP-PET-01-BU, available from Mitsui Chemicals Tohcello, Inc., thickness = 38 $\mu$m) having been treated to be releasable was attached to the adhesive layer to protect the surface of the adhesive layer, thereby obtaining a PET resin sheet with a release film on one side.

<Crosslinker>

The following crosslinkers were prepared.

(B-1): N,N,N',N'-tetraglycidyl-m-xylenediamine ("TETRAD-X", available from Mitsubishi Gas Chemical Company, Inc.)
(C-1): hexamethylene diisocyanate isocyanurate trimer ("Coronate HX", available from Tosoh Corporation)

<Antioxidant>

The following antioxidants were prepared.
(D-1): pentaerythritol tetrakis[3-(3,5-di-tert-butyl-4-hydroxyphenyl)propionate] (hindered phenol antioxidant "Irganox 1010", available from BASF Japan)

<Production of Polyester Adhesive Composition>

Polyester adhesive compositions were produced using each of the polyester resins (A), (A') obtained above and a crosslinker by the following methods.

(Example 1)

The polyester resin (A-1) obtained above was diluted with ethyl acetate to a solid concentration of 50%, and 1.3 parts of the polyepoxy compound (B-1) (solids content) was added to the resulting solution of the polyester resin (A-1) (100 parts as solids content), followed by stirring and mixing, thereby obtaining a polyester adhesive composition.

(Examples 2 to 5, Comparative Examples 1 to 3)

A polyester adhesive composition was obtained in the same manner as in Example 1, except that the components were added as shown in Table 3.

<PET Adhesive Sheet with Release Film on One Side>

Each of the obtained polyester adhesive compositions was applied to a polyethylene terephthalate (PET) film (Toray, Lumirror T60, thickness = 38 $\mu$m) so that the thickness after drying was about 25 $\mu$m, followed by drying at 100°C for 3 minutes to form an adhesive layer. Thereafter, a PET film (release film) (SP-PET-01-BU, available from Mitsui Chemicals Tohcello, Inc., thickness = 38 $\mu$m) having been treated to be releasable was attached to the adhesive layer to protect the surface of the adhesive layer, followed by aging at an ambient temperature of 40°C for four days, thereby obtaining a PET adhesive sheet with a release film on one side.
The resulting PET adhesive sheet with a release film on one side was evaluated as follows. The evaluation results are shown in Table 3 below.

[Gel Fraction]

The PET adhesive sheet with a release film on one side obtained as described above was cut into a 4 cm x 4 cm piece and the release film was peeled off. The PET adhesive sheet without the release film was wrapped with a 200-mesh SUS wire net, immersed in toluene at 23°C for 24 hours, and the mass of an insoluble component of the adhesive remaining in the wire net relative to the mass of the adhesive component before the immersion from which the mass of the PET substrate has been subtracted was measured, and the mass percentage was calculated according to the following formula to determine the gel fraction (%).

Gel fraction (%) = mass of insoluble component of adhesive remaining in wire net after immersion / mass of adhesive component before immersion x 100

[Adhesive Force (Peel Strength) (against SUS-BA)]

A SUS-BA plate was prepared as an adherend. The PET adhesive sheet with a release film on one side obtained as described above was cut to 25 mm x 200 mm under 23°C, 50% RH, and then the release film was peeled off and the adhesive layer side was press-bonded to a SUS-BA plate by reciprocally moving a 2-kg roller twice. After the resulting test sample was allowed to stand still in the same atmosphere for 30 minutes, a 180-degree peel strength (N/25 mm) was measured at a peel rate of 300 mm/min by means of an autograph (AUTOGRAPH AG-X 50N, available from Shimadzu Corporation). (Evaluation Criteria)

A (excellent): adhesive force of 5N/25 mm or more with no adhesive residue on the adherend.
B (very good): adhesive force of 3N/25 mm or more and less than 5N/25 mm, with no adhesive residue on the adherend.
C (good): adhesive force of 1N/25 mm or more and less than 3N/25 mm, with no adhesive residue on the adherend.
D (poor): adhesive force of less than 1N or adhesive residue was observed on the adherend.

[Adhesive Force (Peel Strength) (against ABS)]

An ABS plate was prepared as an adherend. The PET adhesive sheet with a release film on one side obtained as described above was cut to 25 mm x 200 mm under 23°C, 50% RH, and then the release film was peeled off and the adhesive layer side was press-bonded to the ABS plate by reciprocally moving a 2-kg roller twice.
After the resulting test sample was allowed to stand still in the same atmosphere for 30 minutes, a 180-degree peel strength (N/25 mm) was measured at a peel rate of 300 mm/min by means of an autograph (AUTOGRAPH AG-X 50N, available from Shimadzu Corporation).

(Evaluation Criteria)

A (excellent): adhesive force of 5N/25 mm or more with no adhesive residue on the adherend.
B (very good): adhesive force of 3N/25 mm or more and less than 5N/25 mm, with no adhesive residue on the adherend.
C (good): adhesive force of 1N/25 mm or more and less than 3N/25 mm, with no adhesive residue on the adherend.
D (poor): adhesive force of less than 1N or adhesive residue was observed on the adherend.

[Optical Property (H1: Resin Sheet Haze)]

The PET resin sheet with a release film on one side obtained as described above was cut into a 30 mm x 50 mm piece under 23°C, 50% RH, then the release film was peeled off, and the adhesive layer side was press-bonded to alkali-free glass (Eagle XG, available from Corning) by reciprocally moving a 2-kg roller twice, thereby preparing a test piece with a layer of PET film/polyester resin layer/alkali-free glass plate.
The haze (H1) at 23°C and 50% RH of the test piece was measured using HAZE MATER NDH2000 (available from Nippon Denshoku Industries Co., Ltd.).

[Optical Property (H2: Adhesive Sheet Haze)]

The PET adhesive sheet with a release film on one side obtained as described above was cut into a 30 mm x 50 mm piece under 23°C, 50% RH, then the release film was peeled off, and the adhesive layer side was press-bonded to alkali-free glass (Eagle XG, available from Corning) by reciprocally moving a 2-kg roller twice, thereby preparing a test piece with a layer of PET film/adhesive layer/alkali-free glass plate.
The haze (H2) at 23°C and 50% RH of the test piece was measured using HAZE MATER NDH2000 (available from Nippon Denshoku Industries Co., Ltd.).

[Optical Property (ΔH)]

The haze changes in the case of obtaining an adhesive from the polyester resins (A) and (A'), and in the case of obtaining an adhesive by mixing the polyester resins (A) and (A') with the polyepoxy compound (B) or the polyisocyanate compound (C) were calculated using the following formula to evaluate optical properties.

$$\text{Haze change } (\Delta H) = \text{adhesive sheet haze } (H2) - \text{resin sheet haze } (H1)$$

(Evaluation Criteria)

A (excellent): haze change is 0.1 or less
B (very good): haze change is greater than 0.1 and not more than 0.5
C (good): haze change is greater than 0.5 and not more than 1.0
D (poor): haze change is greater than 1.0

<PI Adhesive Sheet with Release Film on One Side>

Each of the obtained polyester adhesive compositions was applied to a polyimide (PI) film (Toray DuPont, Kapton 200H, thickness = 50 $\mu$m) so that the thickness after drying was about 25 $\mu$m, followed by drying at 100°C for 3 minutes to form an adhesive layer. Thereafter, a PET film (release film) (SP-PET-01-BU, available from Mitsui Chemicals Tohcello, Inc., thickness = 38 $\mu$m) having been treated to be releasable was attached to the adhesive layer to protect the surface of the adhesive layer, followed by aging at an ambient temperature of 40°C for four days, thereby obtaining a PI adhesive sheet with a release film on one side.
The resulting PI adhesive sheet with a release film on one side was evaluated as follows. The evaluation results are shown in Table 3 below.

[Heat Resistance]

The release film of the PI adhesive sheet with the release film on one side obtained as described above was peeled off, and the adhesive sheet was bonded to a copper foil under 23°C, 50% RH, and was cut into a 2.0 x 2.0 cm piece, followed by heat treatment at 130°C for 1 hour, thereby producing a test piece with a layer of copper foil/adhesive layer/PI.
The heat resistance was measured by placing the test piece with the PI film facing up in a solder bath at a predetermined temperature (300°C, 320°C) for 60 seconds.

(Evaluation Criteria)

A (excellent): no change in appearance
D (poor): changes in appearance such as removal or peeling

[Moist Heat Resistance]

A SUS-BA plate was prepared as an adherend. The PET adhesive sheet with a release film on one side obtained as described above was cut to 25 mm x 200 mm under 23°C, 50% RH, and then the release film was peeled off and the adhesive layer side was press-bonded to a SUS-BA plate by reciprocally moving a 2-kg roller twice. Then, after allowing it to stand for 500 hours at 85°C, 85% RH, and then for another 1 hour at 23°C, 50% RH, a 180-degree peel strength (N/25 mm) was measured at a peel rate of 300 mm/min by means of an autograph (AUTOGRAPH AG-X 50Nm, available from Shimadzu Corporation).

(Evaluation Criteria)

A (excellent): adhesive force of 10N/25 mm or more with no adhesive residue on the adherend
B (very good): adhesive force of 5N/25 mm or more and less than 10N/25 mm, with no adhesive residue on the adherend
C (good): adhesive force of 3N/25 mm or more and less than 5N/25 mm, with no adhesive residue on the adherend

D (poor): adhesive force of less than 3N or adhesive residue was observed on the adherend

Table 3

| | Adhesive Composition | | | | | | | | Equivalent* | Gel Fraction (%) | Adhesive Force (N/25mm) | | | | Optical Property (%) | | | | Heat Resistance | | Moist Heat Resistance | |
| | Polyester-Based Resin (A) | | Polyepoxy-Based Compound (B) | | Polyisocyanate-Based Compound (C) | | Antioxidant (D) | | | | SUS-BA | | ABS | | H1 | H2 | ΔH | Evaluation | 300°C | 320°C | Adhesive Force (N/25mm) | |
| | Type | Parts | Type | Parts | Type | Parts | Type | Parts | | | value | Evaluation | Value | Evaluation | | | | | | | Value | Evaluation |
|---|---|---|---|---|---|---|---|---|---|---|---|---|---|---|---|---|---|---|---|---|---|---|
| Example 1 | A-1 | 100 | B-1 | 1.3 | - | - | D-1 | 0.1 | 1.5 | 56 | 11.9 | A | 7.9 | A | 0.9 | 1.1 | 0.2 | B | A | D | 18.4 | A |
| Example 2 | A-2 | 100 | B-1 | 4.0 | - | - | D-1 | 0.1 | 2 | 82 | 4.7 | B | 1.1 | C | 0.9 | 1.8 | 0.9 | C | A | A | 24.0 | A |
| Example 3 | A-3 | 100 | B-1 | 4.7 | - | - | D-1 | 0.1 | 2 | 86 | 4.4 | B | 1.2 | C | 0.9 | 1.1 | 0.2 | B | A | A | 21.1 | A |
| Example 4 | A-4 | 100 | B-1 | 2.9 | - | - | D-1 | 0.1 | 2 | 67 | 10.2 | A | 9.5 | A | 0.9 | 1.0 | 0.1 | A | A | A | 20.6 | A |
| Example 5 | A-5 | 100 | B-1 | 0.8 | - | - | D-1 | 0.1 | 1.2 | 58 | 12.3 | A | 10.2 | A | 0.9 | 0.9 | 0 | A | A | A | 21.9 | A |
| Comparative Example 1 | A'-1 | 100 | B-1 | 0.2 | - | - | D-1 | 0.1 | 2 | 0 | 15.3 | D | 13.9 | D | 0.9 | 0.9 | 0 | A | D | D | 0.2 | D |
| Comparative Example 2 | A'-1 | 100 | - | - | C-1 | 1.5 | D-1 | 0.1 | - | 64 | 2.0 | C | 4.5 | B | 0.9 | 1.0 | 0.1 | A | D | D | 22.4 | A |
| Comparative Example 3 | A'-2 | 100 | B-1 | 0.8 | - | - | D-1 | 0.1 | 1.2 | 53 | 10.7 | A | 7.4 | A | 0.9 | 0.9 | 0 | A | A | A | 1.7 | D |

*Equivalent amount of epoxy relative to carboxy group

The results shown in Table 3 revealed that, in the present disclosure, the adhesive layers of the polyester adhesive compositions and the adhesive sheet in Examples 1 to 5 had excellent adhesive force, heat resistance, and moist heat resistance, as well as excellent optical properties.

On the other hand, the adhesive layers of the adhesive compositions and the adhesive sheets in Comparative Examples 1 to 3 were, although excellent in optical properties, inferior in at least one of the adhesive force, heat resistance, and moist heat resistance, and did not satisfy the object of the present disclosure.

While specific forms of the embodiments of the present disclosure have been shown in the aforementioned examples, the examples are merely illustrative but not limitative. It is contemplated that various modifications apparent to those skilled in the art could be made within the scope of the disclosure.

INDUSTRIAL APPLICABILITY

The polyester adhesive composition of the present disclosure has excellent adhesive force, heat resistance, moist heat resistance, and optical properties when used as an adhesive, and such a polyester adhesive composition is particularly effective as an adhesive for use in decorative films and films for electronic members.

**Claims**

1.  A polyester adhesive composition comprising a polyester resin (A) and a polyepoxy compound (B), wherein the polyester resin (A) satisfies all of following (1) to (6):

    (1) the polyester resin (A) has structural units derived from a polyvalent carboxylic acid (a) and structural units derived from a polyhydric alcohol (b);
    (2) a content of structural units derived from a cyclic structure-containing polyvalent carboxylic acid (a1) relative to 100 mol% of the structural units derived from the polyvalent carboxylic acid (a) is 30 mol% or more;
    (3) the structural units derived from the polyhydric alcohol (b) include structural units derived from an aliphatic polyhydric alcohol (b1);
    (4) the polyester resin (A) has an acid value of 1.5 to 30 mg KOH/g;
    (5) the polyester resin (A) has a glass transition temperature of -75 to -20°C; and
    (6) the polyester resin (A) has less than 140 mol% of structural units derived from a cyclic ester relative to 100 mol% of the structural units derived from the polyvalent carboxylic acid (a).

2.  The polyester adhesive composition according to claim 1, wherein the structural units derived from the cyclic structure-containing polyvalent carboxylic acid (a1) are structural units derived from a monocyclic polyvalent carboxylic acid (a1-1).

3.  The polyester adhesive composition according to claim 1 or 2, wherein the structural units derived from the aliphatic polyhydric alcohol (b1) include structural units derived from a polyhydric alcohol having a hydrocarbon group in at least one of side chains.

4.  The polyester adhesive composition according to any one of claims 1 to 3, wherein the polyester resin (A) has structural units derived from a dimer acid (a2) and/or structural units derived from a dimer diol (b2).

5.  The polyester adhesive composition according to any one of claims 1 to 4, wherein the structural units derived from the aliphatic polyhydric alcohol (b1) has a content of 5 to 80 mol% relative to 100 mol% of the structural units derived from the polyhydric alcohol (b).

6.  The polyester adhesive composition according to any one of claims 1 to 5, wherein the structural units derived from the polyhydric alcohol (b) include structural units derived from the dimer diols (b2).

7.  The polyester adhesive composition according to any one of claims 1 to 6, wherein a total content of the structural units derived from the dimer acids (a2) and the structural units derived from the dimer diols (b2) relative to the entire polyester resin (A) is 20 to 90 mass %.

8.  The polyester adhesive composition according to any one of claims 1 to 7, wherein the polyester resin (A) has an ester bond concentration of 1.5 to 8.0 mmol/g.

9. The polyester adhesive composition according to any one of claims 1 to 8, wherein the polyester resin (A) has a crystal fusion heat of 3J/g or less.

10. The polyester adhesive composition according to any one of claims 1 to 9, wherein the polyepoxy compound (B) includes a nitrogen atom-containing polyepoxy compound.

11. The polyester adhesive composition according to any one of claims 1 to 10, wherein the polyepoxy compound (B) has epoxy groups in an equivalent amount of 0.3 to 5 relative to carboxy groups of the polyester resin (A).

12. The polyester adhesive composition according to any one of claims 1 to 11, wherein the polyepoxy compound (B) has a content of 0.1 to 15 parts by mass relative to 100 parts by mass of the polyester resin (A).

13. A polyester adhesive comprising the adhesive composition according to any one of claims 1 to 12, which is crosslinked.

14. The polyester adhesive according to claim 13, wherein the polyester adhesive has a gel fraction of 20 to 100%.

15. An adhesive sheet having an adhesive layer comprising the adhesive according to claim 13 or 14.

16. The adhesive sheet according to claim 15, wherein the adhesive sheet has a haze of 3% or less.

17. An adhesive sheet having a substrate and an adhesive layer comprising the polyester adhesive according to claim 13 or 14, wherein the adhesive layer is provided on at least one side of the substrate.

18. A decorative film comprising the adhesive sheet according to claim 17.

19. A film for electronic member comprising the adhesive sheet according to claim 17.

20. A decorative molded object comprising the decorative film according to claim 18 laminated on a molded object.

21. A decorative film comprising an adhesive layer formed of a polyester adhesive composition containing a polyester resin (A) and a polyepoxy compound (B), wherein
the polyester resin (A) satisfies all of following (1) to (4):

(1) the polyester resin (A) has structural units derived from a polyvalent carboxylic acid (a) and structural units derived from a polyhydric alcohol (b);
(2) a content of structural units derived from a cyclic structure-containing polyvalent carboxylic acid (a1) relative to 100 mol% of the structural units derived from the polyvalent carboxylic acid (a) is 30 mol% or more;
(3) the structural units derived from the polyhydric alcohol (b) include structural units derived from an aliphatic polyhydric alcohol (b1); and
(4) the polyester resin (A) has an acid value of 1.5 to 30 mg KOH/g.

<div align="center">INTERNATIONAL SEARCH REPORT</div>

| International application No. |
| --- |
| **PCT/JP2023/011093** |

**A. CLASSIFICATION OF SUBJECT MATTER**

*C09J 11/06*(2006.01)i; *C09J 163/00*(2006.01)i; *C09J 167/00*(2006.01)i; *C09J 7/38*(2018.01)i
FI: C09J167/00; C09J11/06; C09J7/38; C09J163/00

According to International Patent Classification (IPC) or to both national classification and IPC

**B. FIELDS SEARCHED**

Minimum documentation searched (classification system followed by classification symbols)

C09J11/06; C09J163/00; C09J167/00; C09J7/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 6-145633 A (TOYOBO CO., LTD.) 27 May 1994 (1994-05-27)<br>claims, paragraphs [0004], [0006]-[0007], [0039], examples | 1-9, 11-18, 20-21 |
| X | JP 2018-193537 A (TOYOBO CO., LTD.) 06 December 2018 (2018-12-06)<br>claims, paragraphs [0010], [0018]-[0046], [0065]-[0066], examples | 1-3, 8-18, 20-21 |
| X | JP 2009-280776 A (TOYO INK MFG. CO., LTD.) 03 December 2009 (2009-12-03)<br>claims, paragraphs [0023], [0037], [0081], [0085], [0213], [0225], examples | 1-18, 20-21 |
| X | WO 2008/069298 A1 (TOYO INK MFG. CO., LTD.) 12 June 2008 (2008-06-12)<br>claims, paragraphs [0034], [0074], [0079], [0165], [0176]-[0181], [0559], examples | 1-18, 20-21 |
| X | WO 2021/200713 A1 (TOYOBO CO., LTD.) 07 October 2021 (2021-10-07)<br>claims, paragraphs [0001], [0007], [0023]-[0025], [0027], [0031]-[0035], [0054]-[0074], examples | 1, 3-21 |
| A | JP 4-328186 A (TOYOBO CO., LTD.) 17 November 1992 (1992-11-17)<br>entire text | 1-21 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 May 2023** | **23 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/011093** |

**C.    DOCUMENTS CONSIDERED TO BE RELEVANT**

| Category* | Citation of document, with indication, where appropriate, of the relevant passages | Relevant to claim No. |
|---|---|---|
| A | JP 2021-134344 A (MITSUBISHI CHEMICAL CORP.) 13 September 2021 (2021-09-13)<br>entire text | 1-21 |

Form PCT/ISA/210 (second sheet) (January 2015)

**INTERNATIONAL SEARCH REPORT**
Information on patent family members

International application No.

**PCT/JP2023/011093**

| Patent document cited in search report | | | Publication date (day/month/year) | Patent family member(s) | | | Publication date (day/month/year) |
|---|---|---|---|---|---|---|---|
| JP | 6-145633 | A | 27 May 1994 | (Family: none) | | | |
| JP | 2018-193537 | A | 06 December 2018 | (Family: none) | | | |
| JP | 2009-280776 | A | 03 December 2009 | (Family: none) | | | |
| WO | 2008/069298 | A1 | 12 June 2008 | (Family: none) | | | |
| WO | 2021/200713 | A1 | 07 October 2021 | CN<br>entire text<br>KR | 115315499<br><br>10-2022-0161283 | A<br><br>A | |
| JP | 4-328186 | A | 17 November 1992 | (Family: none) | | | |
| JP | 2021-134344 | A | 13 September 2021 | WO<br>entire text<br>CN<br>KR | 2021/079670<br><br>114555749<br>10-2022-0087444 | A1<br><br>A<br>A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06128363 A
- JP 2019119872 A
- WO 2021200713 A
- JP 2021134344 A

**Non-patent literature cited in the description**

- A Speciation of Bio-Fuel by Easy C-14 Measurement. Tokyo Metropolitan Industrial Technic Institute, 2009